# EUROPÄISCHE PATENTSCHRIFT

(11) **EP 4 146 371 B1**
(45) Veröffentlichungstag und Bekanntmachung des Hinweises auf die Patenterteilung: **25.09.2024**
(21) Anmeldenummer: 21725723.7
(22) Anmeldetag: 06.05.2021
(51) Int. Cl.: B01D 46/00, B05B 14/43

(54) **FILTERANLAGE, LACKIERANLAGE UND VERFAHREN ZUM ABSCHEIDEN VON VERUNREINIGUNGEN**
FILTER SYSTEM, PAINTING PLANT AND METHOD FOR SEPARATING OFF CONTAMINANTS
INSTALLATION DE FILTRE, INSTALLATION DE PEINTURE ET PROCÉDÉ D'ÉLIMINATION D'IMPURETÉS

(30) Priorität: 07.05.2020 DE 102020205792
(43) Veröffentlichungstag der Anmeldung: 15.03.2023
(73) Patentinhaber: Dürr Systems AG, 74321 Bietigheim-Bissingen (DE)
(72) Erfinder: JETTER, Jochen, 74321 Bietigheim-Bissingen (DE); RANK, Hermann, 74382 Neckarwestheim (DE); SEYBOTH, Oliver, 71282 Hemmingen (DE); ACKERMANN, Daniel, 71254 Ditzingen (DE)
(74) Vertreter: DTS Patent- und Rechtsanwälte PartmbB
(86) Internationale Anmeldenummer: PCT/EP2021/061996
(87) Internationale Veröffentlichungsnummer: WO 2021/224393

(56) Entgegenhaltungen:
- WO-A1-2017/009228
- WO-A1-2017/037643
- WO-A1-2017/037644
- DE-A1- 102013 004 082
- DE-A1- 102013 222 301

## Beschreibung

Die vorliegende Erfindung betrifft eine Filteranlage zum Abscheiden von Verunreinigungen aus einem Verunreinigungen enthaltenden Rohgasstrom.

Eine solche Filteranlage ist beispielsweise aus der WO 2010/069407 A1 bekannt.

Aus der WO 2017/037644 A1 ist ferner eine Farbspritzkabine bekannt, welche eine Farbspritzkammer umfasst, in welcher die Farbe gespritzt wird und die mit einem Luftstrom zum Evakuieren des Oversprays versehen ist, der zu mindestens einer Filtereinheit der Kabine zum Filtern und Abscheiden des Farb-Oversprays aus dem Luftstrom gefördert wird. Die Filtereinheit umfasst eine Vielzahl von austauschbaren Filtermodulen, wobei jedes Filtermodul in einem Gehäuse in der Filtereinheit herausnehmbar untergebracht ist. Ein Schienensystem ermöglicht die Entnahme und den Transport jedes Filtermoduls aus der Vielzahl von Modulen zwischen seinem Gehäuse und einem Bereich für den Ein- und Austritt der Filtermodule in/aus der Kabine. DE 10 2013 222301 A1, WO 2017/009228 A1 und DE 10 2013 004082 A1 zeigen weitere relevante Dokumente aus dem Stand der Technik.

Der vorliegenden Erfindung liegt die Aufgabe zugrunde, eine Filteranlage zum Abscheiden von Verunreinigungen bereitzustellen, welche einfach aufgebaut und effizient betreibbar ist.

Diese Aufgabe wird erfindungsgemäß durch eine Filteranlage gemäß dem unabhängigen Vorrichtungsanspruch gelöst.

Die Filteranlage zum Abscheiden von Verunreinigungen aus einem Verunreinigungen enthaltenden Rohgasstrom umfasst vorzugsweise Folgendes:
eine Grundkonstruktion, durch welche der Rohgasstrom hindurchführbar ist und welche mindestens eine Filtermodulaufnahme zur Aufnahme mindestens eines Filtermoduls umfasst, und
mindestens ein Filtermodul, welches wahlweise in mindestens eine Filtermodulaufnahme einbringbar oder aus derselben entfernbar ist.

Insbesondere dann, wenn die Filteranlage eine Grundkonstruktion umfasst, welche eine Filtermodulaufnahme zur Aufnahme mindestens eines Filtermoduls umfasst, kann die Filteranlage einfach aufgebaut und effizient nutzbar sein. Insbesondere kann hierdurch ein einfacher und effizienter Austausch von Filterelementen der Filteranlage ermöglicht werden, wodurch wartungsbedingte Ruhezeiten der Filteranlage minimiert werden können.

Das mindestens eine Filtermodul umfasst optional mehrere Filterelementaufnahmen zur Aufnahme mehrerer voneinander unabhängiger Filterelemente.

Unter voneinander unabhängigen Filterelementen sind in dieser Beschreibung insbesondere einzeln und/oder unabhängig voneinander austauschbare Filterelemente zu verstehen.

Vorzugsweise ist jedem Filterelement eine Filterelementaufnahme zugeordnet, so dass einzelne Filterelemente vorzugsweise in einem betriebsbereiten Einbauzustand verbleiben können, während ein oder mehrere weitere Filterelemente aus den zugehörigen Filterelementaufnahmen entfernt und durch frische Filterelemente ersetzt werden.

Vorzugsweise sind mehrere Filterelemente Bestandteil einer Filtervorrichtung des Filtermoduls.

Insbesondere kann vorgesehen sein, dass mehrere Filterelemente Bestandteil einer Filtervorrichtung des Filtermoduls sind und in einem Filterbetrieb der Filteranlage parallel zueinander mit dem zu reinigenden Rohgasstrom durchströmbar sind.

Günstig kann es sein, wenn das mindestens eine Filtermodul mehrere Filtervorrichtungen umfasst, welche in einem Filterbetrieb der Filteranlage nacheinander mit dem zu reinigenden Rohgasstrom durchströmbar sind.

Die Filtervorrichtungen bilden dann vorzugsweise mehrere bezüglich einer Durchströmungsrichtung hintereinander geschaltete Filterstufen.

Bei einer Ausgestaltung der Erfindung ist vorgesehen, dass das mindestens eine Filtermodul eine Vorfiltervorrichtung, eine Hauptfiltervorrichtung und/oder eine Nachfiltervorrichtung umfasst, welche in einem Filterbetrieb der Filteranlage vorzugsweise mit zumindest einem Teilstrom des Rohgasstroms nacheinander durchströmbar sind.

Vorteilhaft kann es sein, wenn das mindestens eine Filtermodul als ein verfahrbarer und/oder verschiebbarer Transportwagen ausgebildet ist.

Ein solcher Transportwagen kann beispielsweise eine Rollenvorrichtung, insbesondere mehrere Transportrollen, umfassen, mittels welcher der Transportwagen einfach und leichtgängig auf einem Boden verschiebbar ist.

Es kann vorgesehen sein, dass das mindestens eine Filtermodul und/oder die mindestens eine Filtermodulaufnahme eine Führungsvorrichtung zum Führen, Bewegen und/oder Arretieren des mindestens einen Filtermoduls relativ zu der mindestens einen Filtermodulaufnahme umfasst.

Die Führungsvorrichtung dient insbesondere zur gezielten Zuführung und/oder Arretierung des mindestens einen Filtermoduls in einer Filterstellung des Filtermoduls, das heißt in einer Stellung des Moduls, in welcher das Filtermodul in einem Filterbetrieb der Filteranlage angeordnet ist, um Verunreinigungen aus dem Rohgasstrom abzuscheiden.

Die Führungsvorrichtung kann beispielsweise eine Schienenführung und/oder eine Rollenführung umfassen.

Beispielsweise kann eine Teleskopschienenführung der Führungsvorrichtung vorgesehen sein.

Günstig kann es sein, wenn das mindestens eine Filtermodul mittels der Führungsvorrichtung aus einer Filterstellung des Filtermoduls in eine Wechselstellung des Filtermoduls und/oder aus der Wechselstellung des Filtermoduls in die Filterstellung des Filtermoduls führbar und/oder bewegbar ist.

In der Wechselstellung des Filtermoduls ist insbesondere ein Austausch von Filterelementen des Filtermoduls möglich, beispielsweise um verunreinigte Filterelemente durch frische Filterelemente zu ersetzen.

Ferner kann vorgesehen sein, dass in der Wechselstellung des Filtermoduls das gesamte Filtermodul durch ein weiteres Filtermodul austauschbar ist.

Insbesondere kann vorgesehen sein, dass das Filtermodul in der Wechselstellung von der Führungsvorrichtung entfernbar und durch ein anderes Filtermodul austauschbar ist.

Bei einer Ausgestaltung der Erfindung ist vorgesehen, dass die Grundkonstruktion mindestens eine Zugangsöffnung, optional mindestens eine verschließbare Zugangsöffnung, umfasst, durch welche ein Innenraum der mindestens einen Filtermodulaufnahme zum Einbringen und/oder zum Entfernen des mindestens einen Filtermoduls von außerhalb der Filteranlage zugänglich ist.

Insbesondere kann vorgesehen sein, dass das mindestens eine Filtermodul durch die mindestens eine Zugangsöffnung in die mindestens eine Filtermodulaufnahme einbringbar und/oder aus der mindestens einen Filtermodulaufnahme entfernbar ist.

Günstig kann es sein, wenn jede Filtermodulaufnahme der Aufnahme eines einzigen Filtermoduls dient.

Ferner kann es günstig sein, wenn jeder Filtermodulaufnahme eine Zugangsöffnung, insbesondere eine separate Zugangsöffnung, zugeordnet ist.

Eine Zugangsöffnung kann beispielsweise eine verschließbare Türe sein, insbesondere in einer Außenwandung der Grundkonstruktion der Filteranlage.

Bei einer Ausgestaltung der Erfindung kann vorgesehen sein, dass die mindestens eine Filtermodulaufnahme mindestens eine Verschließvorrichtung zum wahlweisen Öffnen oder Schließen einer Einlassöffnung der Filtermodulaufnahme und/oder einer Auslassöffnung der Filtermodulaufnahme umfasst.

Durch die Einlassöffnung der Filtermodulaufnahme ist vorzugsweise zumindest ein Teil des Rohgasstroms der Filtermodulaufnahme zuführbar.

Durch die Auslassöffnung der Filtermodulaufnahme ist vorzugsweise ein Gasstrom, insbesondere ein mittels der Filterelemente gereinigter Gasstrom, aus der Filtermodulaufnahme abführbar.

Die mindestens eine Verschließvorrichtung kann beispielsweise als Klappe oder Jalousie in einer Wandung, insbesondere Deckenwandung und/oder Seitenwandung, einer Filtermodulaufnahme ausgebildet sein.

Es kann vorgesehen sein, dass die Filteranlage mehrere bezüglich einer vertikalen Längsmittelebene der Filteranlage einander gegenüberliegend angeordnete Filtermodulaufnahmen und/oder Filtermodule umfasst.

Insbesondere sind die Filtermodulaufnahmen und/oder Filtermodule vorzugsweise spiegelsymmetrisch bezüglich der vertikalen Längsmittelebene angeordnet und/oder ausgebildet.

Ferner kann vorgesehen sein, dass die Filteranlage mehrere in einer Längsrichtung der Filteranlage, insbesondere in einer Förderrichtung einer Fördervorrichtung einer Lackieranlage, aufeinanderfolgend angeordnete Filtermodulaufnahmen und/oder Filtermodule umfasst.

Die in der Längsrichtung der Filteranlage aufeinanderfolgend angeordneten Filtermodulaufnahmen und/oder Filtermodule bilden vorzugsweise eine parallel zu einer Förderrichtung verlaufende Reihe von Filtermodulaufnahmen bzw. Filtermodulen.

Die Filtermodulaufnahmen weisen vorzugsweise geschlossene seitliche Trennwandungen auf, welche insbesondere im Wesentlichen vertikal und im Wesentlichen senkrecht zur vertikalen Längsmittelebene der Filteranlage ausgerichtet sind und Innenräume von in der Längsrichtung der Filteranlage aufeinanderfolgend angeordneten Filtermodulaufnahmen fluidwirksam voneinander trennen.

Vorzugsweise umfasst die Filteranlage zwei parallel zueinander und parallel zur Längsrichtung angeordnete Reihen von Filtermodulaufnahmen und/oder zwei parallel zueinander und parallel zur Längsrichtung angeordnete Reihen von Filtermodulen.

Es kann vorgesehen sein, dass die Filteranlage mehrere Filtermodulaufnahmen umfasst, welche unabhängig voneinander durchströmbare Strömungskanäle der Filteranlage bilden.

Die Filteranlage, insbesondere die Filtermodulaufnahmen, weist vorzugsweise Verschließvorrichtungen auf, mittels welchen einzelne oder mehrere Strömungskanäle verschließbar oder freigebbar sind.

Vorzugsweise ist vorgesehen, dass mittels der Verschließvorrichtungen die Durchströmung des Innenraums einzelner Filtermodulaufnahmen unterbrechbar ist, um das in der Filtermodulaufnahme aufgenommene mindestens eine Filtermodul und/oder mindestens ein Filterelement ohne Beeinträchtigung durch den Rohgasstrom austauschen zu können.

Vorteilhaft kann es sein, wenn die Filteranlage mindestens einen sich zwischen mindestens zwei Filtermodulaufnahmen erstreckenden Rohgasschacht umfasst, durch welchen der Rohgasstrom, insbesondere in im Wesentlichen vertikaler Richtung (Schwerkraftrichtung), hindurchführbar und Einlassöffnungen der Filtermodulaufnahmen zuführbar ist.

Ferner kann vorgesehen sein, dass die Filteranlage mindestens einen sich zwischen mindestens zwei Filtermodulaufnahmen erstreckenden Reingaskanal umfasst, durch welchen ein Reingasstrom, der durch Abscheiden von Verunreinigungen aus dem Rohgasstrom erhältlich ist, abführbar ist.

Insbesondere kann vorgesehen sein, dass die Filteranlage mindestens einen sich zwischen mindestens zwei Filtermodulaufnahmen erstreckenden Reingassammelkanal umfasst, mittels welchem mehrere Reingasströme aus mehreren Filtermodulen zusammengeführt und gemeinsam abgeführt werden.

Eine effiziente Filteranlage kann auch durch einen effizienten Austausch von Filterelementen ermöglicht werden.

Die vorliegende Erfindung betrifft daher auch eine Filteranlage zum Abscheiden von Verunreinigungen aus einem Verunreinigungen enthaltenden Rohgasstrom, welche mindestens eine Filterelementaufnahme zur Aufnahme mindestens eines Filterelements und mindestens eine Wechselvorrichtung zum automatischen Austausch eines in der mindestens einen Filterelementaufnahme angeordneten stärker verunreinigten Filterelements gegen ein weniger stark verunreinigtes Filterelement umfasst.

Diese Filteranlage weist vorzugsweise ferner einzelne oder mehrere der im Zusammenhang mit den übrigen beschriebenen Filteranlagen erläuterten Merkmale und/oder Vorteile auf.

Insbesondere kann die beschriebene Wechselvorrichtung zur Weiterbildung der übrigen beschriebenen Filteranlagen verwendet werden.

Unter einem stark verunreinigten Filterelement ist in dieser Beschreibung und den beigefügten Ansprüchen insbesondere ein Filterelement zu verstehen, welches aufgrund des Filterbetriebs der Filteranlage Verunreinigungen aufgenommen hat und somit einen hohen Beladungsgrad oder Füllgrad aufweist, wodurch sich eine geringe Filterwirkung, ein hoher Strömungswiderstand, eine geringe mechanische Stabilität des Filterelements und/oder eine hohe Brandgefahr ergeben können.

Ein weniger stark verunreinigtes Filterelement ist insbesondere ein frisches Filterelement, welches nicht oder nur gering mit Verunreinigungen beladen ist und somit für einen effizienten Filterbetrieb der Filteranlage genutzt werden kann.

Zur vereinfachten Bezugnahme wird ein stark verunreinigtes Filterelement oder ein stärker verunreinigtes Filterelement nachfolgend allgemein als "verunreinigtes Filterelement" bezeichnet.

Ein weniger stark verunreinigtes Filterelement oder ein Filterelement, welches lediglich geringe oder gar keine Verunreinigungen aufweist, wird nachfolgend zur Vereinfachung als "frisches Filterelement" bezeichnet.

Die Filteranlage kann beispielsweise eine oder mehrere Wechselvorrichtungen umfassen. Insbesondere kann vorgesehen sein, dass jeder Reihe von Filtermodulaufnahmen und/oder Filtermodulen eine oder mehrere Wechselvorrichtungen zugeordnet sind.

Vorteilhaft kann es sein, wenn die Wechselvorrichtung eine Robotervorrichtung umfasst oder als eine Robotervorrichtung ausgebildet ist.

Günstig kann es sein, wenn mittels der Wechselvorrichtung mindestens ein Filtermodul aus einer Filterstellung in eine Wechselstellung und/oder aus der Wechselstellung in die Filterstellung bringbar ist.

Bei einer Ausgestaltung der Erfindung ist vorgesehen, dass eine Wechselvorrichtung mehreren Filterelementaufnahmen, mehreren Filtermodulen, mehreren Filtervorrichtungen und/oder mehreren Filterelementen zugeordnet ist, um bei Bedarf einzelne oder sämtliche Filterelemente dieser Filtervorrichtungen und/oder Filtermodule austauschen zu können.

Die Wechselvorrichtung, insbesondere eine Robotervorrichtung, ist hierzu insbesondere beweglich und/oder verfahrbar an der Filteranlage angeordnet.

Die Wechselvorrichtung kann dabei beispielsweise auf einer Rohgasseite und/oder auf einer Reingasseite, das heißt bezüglich einer Durchströmungsrichtung der Filtermodule stromaufwärts und/oder stromabwärts der Filtermodule angeordnet sein.

Es kann vorgesehen sein, dass mittels der Wechselvorrichtung insbesondere als Einweg-Filterelemente ausgebildete Filterelemente austauschbar sind.

Vorteilhaft kann es sein, wenn die Wechselvorrichtung, insbesondere die Robotervorrichtung, verfahrbar an einem integrierten Traversemodul (ITM) der Filteranlage und/oder einer (noch zu beschreibenden) Lackieranlage aufgehängt ist.

Insbesondere dann, wenn die Wechselvorrichtung, beispielsweise die Robotervorrichtung, auf einer Rohgasseite der Filteranlage angeordnet ist, kann vorgesehen sein, dass die Wechselvorrichtung eine Abdeckung, beispielsweise einen Schlauchschrumpf und/oder ein Schirmsystem, umfasst, mittels welchem die Wechselvorrichtung vor einer Verunreinigung durch die in dem Rohgasstrom enthaltenden Verunreinigungen, insbesondere Lack-Overspray, geschützt werden kann.

Günstig kann es sein, wenn die Wechselvorrichtung eine oder mehrere Aufnahmevorrichtungen zur Aufnahme von frischen oder ausgetauschten Filterelementen umfasst. Die Filterelemente können dann besonders einfach mittels der Wechselvorrichtung zu den Filterelementaufnahmen hin- oder von den Filterelementaufnahmen wegtransportiert werden.

Alternativ oder ergänzend hierzu kann vorgesehen sein, dass die Wechselvorrichtung eine Fördervorrichtung umfasst oder dass der Wechselvorrichtung eine Fördervorrichtung zugeordnet ist, mittels welcher frische Filterelemente zu der Wechselvorrichtung hin- und/oder verunreinigte Filterelemente von der Wechselvorrichtung wegtransportiert werden können.

Vorzugsweise eignet sich die Verwendung einer Wechselvorrichtung, insbesondere einer Robotervorrichtung, sowohl bei einer mittigen Rohgaszuführung (längs der vertikalen Längsmittelebene), insbesondere mittiger Kabinenluftzufuhr, als auch bei seitlicher außermittiger Rohgaszuführung.

Die Filteranlage eignet sich insbesondere zur Verwendung in einer Lackieranlage zum Lackieren von Werkstücken, insbesondere Fahrzeugkarosserien.

Die vorliegende Erfindung betrifft daher auch eine Lackieranlage zum Lackieren von Werkstücken, insbesondere Fahrzeugkarosserien, welche mindestens eine erfindungsgemäße Filteranlage umfasst.

Die erfindungsgemäße Lackieranlage weist vorzugsweise einzelne oder mehrere der im Zusammenhang mit einer Filteranlage beschriebenen Merkmale und/oder Vorteile auf.

Die vorliegende Erfindung betrifft ferner ein Verfahren zum Abscheiden von Verunreinigungen aus einem Verunreinigungen enthaltenden Rohgasstrom mittels einer Filteranlage.

Der Erfindung liegt diesbezüglich die Aufgabe zugrunde, ein Verfahren bereitzustellen, welches einfach und effizient durchführbar ist.

Diese Aufgabe wird erfindungsgemäß durch die Merkmale des unabhängigen Verfahrensanspruchs gelöst.

Das Verfahren zum Abscheiden von Verunreinigungen aus einem Verunreinigungen enthaltenden Rohgasstrom umfasst vorzugsweise Folgendes: Zuführen des Rohgasstroms von einem den Rohgasstrom führenden Teil einer Grundkonstruktion der Filteranlage zu einem Filtermodul der Filteranlage, wobei das Filtermodul an und/oder in einer Filtermodulaufnahme der Filteranlage angeordnet ist;
Abscheiden von Verunreinigungen aus dem Rohgasstrom an einem oder mehreren Filterelementen des Filtermoduls;
Sperren eines Fluiddurchgangs zwischen dem den Rohgasstrom führenden Teil der Grundkonstruktion und einer Umgebung der Filteranlage mittels einer Sperrvorrichtung;
Entfernen des Filtermoduls von und/oder aus der Filtermodulaufnahme.

Günstig kann es sein, wenn ein oder mehrere Filtermodule nach der Durchführung eines Abscheidevorgangs und der damit einhergehenden Verunreinigung derselben gegen ein oder mehrere weniger stark verunreinigte Filtermodule, insbesondere frische oder neue oder regenerierte Filtermodule, ausgetauscht werden.

Vorteilhaft kann es sein, wenn der Fluiddurchgang gesperrt wird, bevor das Filtermodul von und/oder aus der Filtermodulaufnahme entfernt wird.

Alternativ oder ergänzend hierzu kann vorgesehen sein, dass der Fluiddurchgang gesperrt wird, während das Filtermodul von und/oder aus der Filtermodulaufnahme entfernt wird.

Das erfindungsgemäße Verfahren weist vorzugsweise einzelne oder mehrere der im Zusammenhang mit der erfindungsgemäßen Filteranlage und/oder der erfindungsgemäßen Lackieranlage beschriebenen Merkmale und/oder Vorteile auf.

Ferner können die erfindungsgemäße Filteranlage, die erfindungsgemäße Lackieranlage und/oder das erfindungsgemäße Verfahren einzelne oder mehrere der nachfolgend beschriebenen Merkmale und/Vorteile aufweisen:
Es kann vorgesehen sein, dass ein oder mehrere Filterelemente als sogenannte Einweg-Filterelemente ausgebildet sind.

Beispielsweise kann vorgesehen sein, dass hierbei ein Hohlkörper, insbesondere aus einem nicht metallischen Material, vorgesehen ist, bei welchem in Richtung eines eintretenden Luftstroms (Rohgasstroms) aufeinanderfolgende Wände Öffnungen aufweisen, die in Durchströmungsrichtung kleiner werden. Insbesondere kann vorgesehen sein, dass mittels mindestens eines solchen Filterelements eine Vorfiltervorrichtung gebildet ist.

Ferner kann vorgesehen sein, dass mindestens ein Filterelement mehrere Abscheideelemente umfasst, welche so angeordnet sind, dass sich ein Strömungslabyrinth bildet. Die Abscheideelemente sind vorzugsweise bei geringer Beladung (Verunreinigung) durchlässig, so dass die Abscheideelemente als Abscheidefilter (Tiefenfilter) dienen können. Bei stärkerer Beladung (Verunreinigung) der Abscheideelemente dient das Filterelement dann insbesondere als ein Trägheitsfilter.

Mindestens ein Filterelement kann beispielsweise ein Fasermaterial und/oder ein Vliesmaterial umfassen oder aus einem Fasermaterial und/oder einem Vliesmaterial gebildet sein.

Günstig kann es sein, wenn mindestens ein Filterelement als ein Einwegelement, beispielsweise als ein recycelbares Einwegelement, ausgebildet ist. Beispielsweise kann vorgesehen sein, dass mindestens ein Filterelement aus nassfestem Recyclingmaterial hergestellt und zur Weiterverwendung erneut zu nassfestem Recyclingmaterial verarbeitbar ist.

Die Filteranlage kann vorzugsweise mindestens zwei, insbesondere drei oder vier, Filterstufen, das heißt bezüglich einer Strömungsrichtung hintereinander angeordnete Filtervorrichtungen, aufweisen.

Vorzugsweise sind eine Vorfiltervorrichtung, eine Hauptfiltervorrichtung, eine Nachfiltervorrichtung und/oder eine Sicherheitsfiltervorrichtung (Zusatzfiltervorrichtung; Polizeifiltervorrichtung) vorgesehen.

Die Sicherheitsfiltervorrichtung ist vorzugsweise fest in die Grundkonstruktion integriert, während die Vorfiltervorrichtung, die Hauptfiltervorrichtung und/oder die Nachfiltervorrichtung vorzugsweise in bewegbaren Filtermodulen angeordnet sind.

Zum Transport eines oder mehrerer Filtermodule kann vorzugsweise eine Transportvorrichtung vorgesehen sein.

Beispielsweise kann die Transportvorrichtung als ein Hubwagen ausgebildet sein.

Günstig kann es sein, wenn die Transportvorrichtung, insbesondere der Hubwagen, ein oder mehrere Auffangelemente, insbesondere Auffangwannen, zum Auffangen von von den Filterelementen herabfallenden Verunreinigungen umfasst.

Günstig kann es sein, wenn das Filtermodul mittels einer Sicherungsvorrichtung an der Transportvorrichtung festlegbar ist, insbesondere um ein Kippen des Filtermoduls während des Transports desselben zu verhindern.

Ferner kann vorgesehen sein, dass ein, insbesondere automatischer, Wechsel einzelner Filterelemente direkt in der Filteranlage durchgeführt wird. Das Filtermodul kann dann insbesondere stationär sein.

Eine Abdichtung des Filtermoduls gegenüber der Filtermodulaufnahme und/oder der Grundkonstruktion erfolgt vorzugsweise mittels einer oder mehrerer Flanschverbindungen, beispielsweise mittels eines oder mehrerer Winkelflansche.

Insbesondere kann ein Winkelflansch mit im Wesentlichen P-förmigem Querschnitt vorgesehen sein, welcher zur Abdichtung gegen ein Dichtelement, insbesondere ein Moosgummi-Element, pressbar ist.

Vorzugsweise wird das Filtermodul zur Abdichtung gegenüber der Filtermodulaufnahme gegen einen oder mehrere Flansche geschoben und in dieser Stellung arretiert.

Ein zur Abdichtung erforderlicher Anpressdruck wird vorzugsweise mittels einer Führungsvorrichtung, insbesondere einer Teleskopschienenvorrichtung, aufgebracht.

Alternativ oder ergänzend hierzu kann vorgesehen sein, dass das Filtermodul zur Abdichtung der Flanschverbindung in einer gewünschten Filterstellung mittels einer Arretiervorrichtung arretiert wird. Eine solche Arretiervorrichtung (Verriegelungseinrichtung) kann beispielsweise an einer Kabinenwandung, insbesondere einer Seitenwandung der Filtermodulaufnahme, aufgeprägt oder eingeprägt sein.

Insbesondere dann, wenn die Filtermodule und Filtermodulaufnahmen auf einem Boden angeordnet sind, auf welchem die gesamte Filteranlage und/oder Lackieranlage aufbaut, kann die von der Grundkonstruktion aufzunehmende maximale Traglast reduziert und somit die Grundkonstruktion einfacher und kostengünstiger gestaltet werden. Insbesondere kann hierdurch eine oberhalb dieses Bodens angeordnete Begehung oder ein mittels der Grundkonstruktion gebildeter weiterer Boden für ein geringeres Gewicht ausgelegt werden.

Es kann vorgesehen sein, dass die Filtermodule in mindestens einer senkrecht zur vertikalen Längsmittelebene der Filteranlage verlaufenden Richtung durchströmt werden.

Alternativ oder ergänzend hierzu kann vorgesehen sein, dass die Filtermodule in mindestens einer parallel zur vertikalen Längsmittelebene verlaufenden Richtung durchströmt werden.

Die Durchströmungsrichtungen sind dabei vorzugsweise im Wesentlichen horizontal oder vertikal ausgerichtet.

Ein Filterelement einer Vorfiltervorrichtung ist vorzugsweise als ein Trägheitsfilter mit einer einfachen oder mehrfachen Strömungsumlenkung ausgebildet. Das Filterelement kann beispielsweise aus Karton, Kunststoff, Keramik und/oder Metall gebildet sein oder Karton, Kunststoff, Keramik und/oder Metall umfassen. Insbesondere ist das Filterelement aus Recyclingmaterial gebildet.

Vorteilhaft kann es sein, wenn ein Filterelement einer Vorfiltervorrichtung zumindest näherungsweise dieselben Ausmaße in horizontaler Richtung aufweist, wie die Hauptfiltervorrichtung.

Insbesondere kann vorgesehen sein, dass ein Hohlkörper, beispielsweise ein Rahmen, der Hauptfiltervorrichtung zur Aufnahme und/oder Ausbildung der Vorfiltervorrichtung genutzt wird. Vorzugsweise müssen dann lediglich noch die Filterelemente der Vorfiltervorrichtung in dieselbe eingesetzt werden.

Die Hauptfiltervorrichtung umfasst vorzugsweise ein oder mehrere Filterelemente, welche aus Karton, Papier, Kunststoff, Keramik und/oder Metall gebildet sind oder Karton, Papier, Kunststoff, Keramik und/oder Metall umfassen.

Insbesondere ist mindestens ein Filterelement der Hauptfiltervorrichtung teilweise oder vollständig aus Einwegmaterial, recyceltem Material und/oder recycelbarem Material gebildet.

Mindestens ein Filterelement der Hauptfiltervorrichtung ist vorzugsweise ein Trägheitsabscheider, wobei insbesondere mehrere in Strömungsrichtung hintereinander angeordnete Segmente vorgesehen sind, welche im Wesentlichen unabhängig voneinander austauschbar sind, so dass insbesondere stärker verschmutzte stromaufwärts angeordnete Segmente häufiger gewechselt werden können, als die stromabwärts angeordneten Segmente.

Ein oder mehrere Filterelemente der Nachfiltervorrichtung umfassen vorzugsweise ein Fasermaterial und/oder ein Vliesmaterial, beispielsweise in Form eines Mattenfilters.

Insbesondere dann, wenn ein Umluftbetrieb der Lackieranlage vorgesehen ist, kann eine Zusatzfiltervorrichtung und/oder Sicherheitsfiltervorrichtung (Polizeifilter) vorgesehen sein.

Filterelemente der Sicherheitsfiltervorrichtung und/oder Zusatzfiltervorrichtung sind vorzugsweise Taschenfilterelemente oder Kassettenfilterelemente.

Insbesondere dann, wenn ein Rohgasschacht vorgesehen ist, mittels welchem der Rohgasstrom längs der vertikalen Längsmittelebene mittig in der Filteranlage geführt wird, kann aus Brandschutzgründen vorgesehen sein, dass der Rohgasschacht mittels eines Schiebers oder einer Klappe verschließbar ist.

Insbesondere kann hierdurch vorzugsweise ein Einlass der Filtermodulaufnahmen und/oder der Filtermodule geschlossen werden.

Es kann vorgesehen sein, dass einzelne Abschnitte des Rohgasschachts abdeckbar oder verschließbar sind. Insbesondere im Falle eines Filterelementwechsels und/oder Filtermodulwechsels kann dann vorzugsweise derjenige Bereich des Rohgasschachts, an welchen sich das zu wechselnde Filterelement und/oder Filtermodul anschließt, abgedeckt oder verschlossen werden, um eine unerwünschte Verunreinigung während des Wechselvorgangs zu verhindern oder zumindest zu reduzieren.

Es kann vorgesehen sein, dass verunreinigte Filterelemente an einer Wechselstation entnommen und beispielsweise über eine Rutsche oder eine Öffnung auf der Arbeitsebene einem Sammelbehälter zugeführt werden.

Der Sammelbehälter kann beispielsweise als ein Sammel- und/oder Presscontainer ausgebildet sein, um eine Vielzahl von verunreinigten Filterelementen aufnehmen zu können.

Vorzugsweise werden an der Wechselstation neue, leere, teils befüllte, aufbereitete und/oder frische Filterelemente zugeführt, insbesondere in die Filterelementaufnahmen eingeführt.

Die Wechselstation ist beispielsweise der Bereich, in welchem mindestens ein Filtermodul angeordnet ist, wenn dieses in der Wechselstellung vorliegt.

Es kann jedoch auch vorgesehen sein, dass die Wechselstation eine Stelle ist, zu welcher das mindestens eine Filtermodul mittels der Transportvorrichtung transportierbar ist.

Es kann vorgesehen sein, dass die Filterelemente, insbesondere die verunreinigten Filterelemente, vor einem Pressen derselben, insbesondere in dem Presscontainer, verpackt werden, beispielsweise mittels eines Kunststoffsacks. Auf diese Weise kann eine Verschmutzung des Sammel- und/oder Presscontainers verhindert werden.

Insbesondere dann, wenn die Filterelemente oder Filtermodule unterschiedliche Verunreinigungsgrade (Beladungsgrade) aufweisen, können sich unerwünschte Strömungen, insbesondere Längsströmungen, in der Filteranlage und/oder der Lackierkabine der Lackieranlage ergeben. Derartige unerwünschte Strömungen können beispielsweise wie folgt verringert oder vermieden werden:
Insbesondere zur Automatisierung der Filteranlage kann vorgesehen sein, dass einzelne oder mehrere Elemente oder Module, insbesondere Filterelemente und/oder Filtermodule, maschinell bewegbar und/oder verfahrbar sind.

Beispielsweise kann vorgesehen sein, dass die Filtermodule mittels einer Führungsvorrichtung maschinell bewegbar sind. Die Führungsvorrichtung umfasst hierzu vorzugsweise eine Antriebsvorrichtung, beispielsweise einen Pneumatikzylinder oder Hydraulikzylinder.

Zum Transport der Filtermodule, insbesondere zum Entfernen und/oder Zuführen der Filtermodule von bzw. zu einer Aufnahmeposition (Wechselstellung) der Führungsvorrichtung, kann beispielsweise ein Hängeförderer und/oder ein fahrerloses Transportsystem, insbesondere ein fahrerloses bodengebundenes Transportsystem, vorgesehen sein.

Günstig kann es sein, wenn mindestens eine Filtermodulaufnahme an einer Außenwandung der Filteranlage, insbesondere einer Außenwandung der Grundkonstruktion der Filteranlage, angeordnet und/oder in die Außenwandung der Filteranlage, insbesondere in die Außenwandung der Grundkonstruktion der Filteranlage, integriert ist.

Dabei kann vorgesehen sein, dass mindestens ein Filtermodul durch Anlegen desselben an die Außenwandung an der mindestens einen Filtermodulaufnahme anordenbar ist.

Beispielsweise kann vorgesehen sein, dass ein Filtermodul flächig an die Außenwandung anlegbar ist.

Vorzugsweise umfassen die Filtermodulaufnahme, insbesondere die Außenwandung, und das Filtermodul jeweils eine Einlassöffnung und eine Auslassöffnung.

Eine Einlassöffnung des Filtermoduls und eine Auslassöffnung des Filtermoduls sind vorzugsweise durch Anlegen des Filtermoduls an die Außenwandung passend an eine hierzu korrespondierende Einlassöffnung und eine hierzu korrespondierende Auslassöffnung der Außenwandung anlegbar.

Eine Abdichtung zwischen der Außenwandung und dem Filtermodul erfolgt vorzugsweise mittels eines oder zweier Flansche oder Flanschbereiche.

Vorzugsweise durchströmt ein Gasstrom ein Gehäuse, insbesondere ein geschlossenes Gehäuse, eines Filtermoduls, vorzugsweise ohne das Filtermodul selbst zu umströmen.

Die Außenwandung der Filteranlage, insbesondere die Außenwandung der Grundkonstruktion der Filteranlage, weist vorzugsweise eine oder mehrere Einbuchtungen auf, in welchen ein oder mehrere Filtermodule anordenbar sind.

Vorzugsweise sind zwei bezüglich der vertikalen Längsmittelebene der Filteranlage einander gegenüberliegend angeordnete und im Wesentlichen spiegelsymmetrisch zueinander ausgebildete Einbuchtungen in den bezüglich der vertikalen Längsmittelebene aneinander gegenüberliegend angeordneten Außenwandungen der Filteranlage vorgesehen.

Die Einbuchtungen erstrecken sich vorzugsweise längs einer Förderrichtung einer Fördervorrichtung der Lackieranlage.

Vorzugsweise sind mehrere Filtermodule in einer Einbuchtung aufnehmbar.

Türen und/oder Zwischenwände zwischen einzelnen Filtermodulen sind vorzugsweise entbehrlich.

Es kann vorgesehen sein, dass ein Filtermodul ein Gehäuse umfasst, welches eine Filterzugangsöffnung, beispielsweise eine Türe, umfasst.

Die Filterzugangsöffnung, insbesondere die Türe, ist beispielsweise in einer Rückseite des Gehäuses des Filtermoduls angeordnet.

Die Rückseite ist insbesondere eine im Filterbetrieb der Filteranlage von einer Umgebung der Filteranlage zugängliche Seite des Gehäuses des Filtermoduls.

Insbesondere ist die Rückseite eine einer Vorderseite des Filtermoduls abgewandte Seite, wobei die Vorderseite vorzugsweise diejenige Seite des Gehäuses des Filtermoduls ist, in welcher eine Einlassöffnung und/oder eine Auslassöffnung des Filtermoduls angeordnet sind.

Die Vorderseite ist insbesondere diejenige Seite des Filtermoduls, mit welcher das Filtermodul an der Filtermodulaufnahme anordenbar ist.

Insbesondere zum Wechseln einzelner oder mehrerer Filterelemente von Filtervorrichtungen eines Filtermoduls kann vorgesehen sein, dass diese Filterelemente durch eine Filterzugangsöffnung, insbesondere eine Türe, in dem Gehäuse des Filtermoduls hindurch zugänglich sind.

Alternativ oder ergänzend hierzu kann vorgesehen sein, dass Gehäuseteile des Gehäuses des Filtermoduls entfernbar sind.

Ferner kann alternativ oder ergänzend hierzu vorgesehen sein, dass Filterelemente, beispielsweise ein Nachfilterelement einer Nachfiltervorrichtung, als Einschubelemente zum, insbesondere seitlichen, Einschieben in das Filtermodul ausgebildet sind.

Vorteilhaft kann es sein, wenn die Hauptfiltervorrichtung und/oder die Nachfiltervorrichtung so ausgebildet sind, dass eine Nachfiltervorrichtung, insbesondere ein oder mehrere Filterelemente der Nachfiltervorrichtung, bei zumindest teilweise demontierter Hauptfiltervorrichtung durch die Hauptfiltervorrichtung hindurch zugänglich und/oder austauschbar sind.

Bei einer Ausgestaltung der Erfindung kann vorgesehen sein, dass eine oder mehrere Einlassöffnungen einer Filtermodulaufnahme und/oder eine oder mehrere Einlassöffnungen eines Filtermoduls bezüglich der Schwerkraftrichtung unterhalb, insbesondere direkt unter, einer oder mehreren Auslassöffnungen der Filtermodulaufnahme und/oder einer oder mehreren Auslassöffnungen des Filtermoduls angeordnet sind.

Alternativ oder ergänzend hierzu kann vorgesehen sein, dass eine oder mehrere Einlassöffnungen einer Filtermodulaufnahme und/oder eine oder mehrere Einlassöffnungen eines Filtermoduls bezüglich der Schwerkraftrichtung oberhalb, insbesondere direkt über, einer oder mehreren Auslassöffnungen der Filtermodulaufnahme und/oder einer oder mehreren Auslassöffnungen des Filtermoduls angeordnet sind.

Es kann vorgesehen sein, dass eine oder mehrere Einlassöffnungen einerseits und eine oder mehrere Auslassöffnungen andererseits in derselben Wandung, beispielsweise in einer Vorderseite eines Filtermoduls, oder in voneinander verschiedenen Wandungen angeordnet sind.

Bei einer Ausgestaltung der Erfindung kann vorgesehen sein, dass die Filteranlage, insbesondere ein Filtermodul und/oder eine Filtermodulaufnahme, eine oder mehrere Verschließvorrichtungen zum Verschließen eines Strömungswegs an einem Übergang zwischen dem Filtermodul und der Filtermodulaufnahme umfasst.

Zum Betätigen der Verschließvorrichtung ist beispielsweise eine Betätigungsvorrichtung vorgesehen.

Eine Betätigungsvorrichtung umfasst insbesondere einen Betätigungshebel, welcher mit einem oder mehreren Klappenelementen der Verschließvorrichtung gekoppelt ist.

Durch eine Betätigung des Betätigungshebels sind vorzugsweise das eine oder die mehreren Klappenelemente der Verschließvorrichtung von einer Offenstellung in eine Schließstellung bzw. von einer Schließstellung in eine Offenstellung bringbar.

Vorzugsweise umfasst die Verschließvorrichtung eine Rückstellvorrichtung, beispielsweise eine Feder, mittels welcher der Betätigungshebel und/oder das eine oder die mehreren Verschließelemente der Verschließvorrichtung automatisch in eine Schließstellung bringbar sind oder gebracht werden, beispielsweise bei ausbleibender Betätigung des Betätigungshebels.

Vorzugsweise umfasst die Betätigungsvorrichtung ferner einen Anschlag und/oder eine Kulissenführung, welcher bzw. welche beispielsweise an einem Filtermodul angeordnet ist und der Betätigung des Betätigungshebels dient.

Der Betätigungshebel und die gesamte Verschließvorrichtung sind dann vorzugsweise an einer Filtermodulaufnahme angeordnet.

Es kann jedoch auch vorgesehen sein, dass die Verschließvorrichtung und der Betätigungshebel der Betätigungsvorrichtung an einem Filtermodul angeordnet sind. Der Anschlag und/oder die Kulissenführung zum Betätigen des Betätigungshebels ist dann vorzugsweise an der Filtermodulaufnahme angeordnet.

Die Verschließvorrichtung ist insbesondere eine Klappe zum Verschluss eines Reingaskanals gegenüber einer Umgebung der Filteranlage.

Eine Verschließvorrichtung ist vorzugsweise direkt stromabwärts des Filtermoduls angeordnet.

Die Verschließvorrichtung ist vorzugsweise durch das Heranfahren des Filtermoduls an die Filtermodulaufnahme mechanisch betätigbar, insbesondere derart, dass ein oder mehrere Verschließelemente der Verschließvorrichtung geöffnet werden.

Wird das Filtermodul von der Filtermodulaufnahme entfernt, werden die Verschließelemente der Verschließvorrichtung vorzugsweise automatisch, insbesondere selbsttätig oder maschinell, geschlossen.

Der Öffnungsvorgang und/oder der Schließvorgang können vorzugsweise mittels des Anschlags und/oder einer Führungskulisse ausgelöst werden.

Bei einer Weiterbildung der Erfindung kann vorgesehen sein, dass ein Filtermodul ein fahrerloses Transportfahrzeug ist oder ein fahrerloses Transportfahrzeug umfasst.

Ein solches Filtermodul kann vorzugsweise selbstständig in eine Filterposition an einer Filtermodulaufnahme und/oder zu einem Wechselplatz zum Wechseln eines oder mehrerer Filterelemente fahren.

Alternativ oder ergänzend hierzu kann vorgesehen sein, dass die Filteranlage ein separates Fahrzeug mit Fahrantrieb, insbesondere ein fahrerloses Transportfahrzeug, umfasst, mittels welchem ein, vorzugsweise antriebsloses, Filtermodul von einer Filtermodulaufnahme zu einem Wechselplatz und/oder von dem Wechselplatz zur Filtermodulaufnahme transportierbar ist.

Alternativ oder ergänzend zu einer Verschließvorrichtung kann eine Sperrvorrichtung vorgesehen sein, mittels welcher beispielsweise bei einem Filtermodulwechsel ein Austritt von Verunreinigungen aus der Filteranlage in eine Umgebung der Filteranlage verhinderbar oder zumindest reduzierbar ist.

Die Sperrvorrichtung ist vorzugsweise eine von der Verschließvorrichtung separate und/oder verschiedene Vorrichtung.

Die Filteranlage umfasst vorzugsweise eine Sperrvorrichtung, mittels welcher ein Fluiddurchgang zwischen einem den Rohgasstrom führenden Teil der Grundkonstruktion und einer Umgebung der Filteranlage wahlweise sperrbar oder freigebbar ist.

Der den Rohgasstrom führende Teil der Grundkonstruktion ist beispielsweise ein Rohgasschacht der Filteranlage.

Erfindungsgemäß umfasst die Sperrvorrichtung ein oder mehrere Sperrelemente, welche wahlweise in den Fluiddurchgang einbringbar oder aus demselben entfernbar sind.

Durch das Einbringen des einen oder der mehreren Sperrelemente ist der Fluiddurchgang vorzugsweise sperrbar, insbesondere zumindest näherungsweise vollständig verschließbar oder zumindest größtenteils verschließbar.

Durch das Entfernen des einen oder der mehreren Sperrelemente ist der Fluiddurchgang vorzugsweise freigebbar, insbesondere zumindest näherungsweise vollständig freigebbar oder zumindest größtenteils freigebbar.

Alternativ oder ergänzend zu einem Einbringen eines oder mehrerer Sperrelemente in den Fluiddurchgang kann vorgesehen sein, dass die Sperrvorrichtung ein oder mehrere Sperrelemente umfasst, mittels welcher der Fluiddurchgang wahlweise abdeckbar oder freigebbar ist.

Mittels des einen oder der mehreren Sperrelemente ist der Fluiddurchgang vorzugsweise zumindest näherungsweise vollständig abdeckbar oder zumindest größtenteils abdeckbar.

Eine oder mehrere oder sämtliche Sperrelemente sind als Schwenktür oder Schwenktor ausgebildet.

Bei einer Ausgestaltung der Erfindung kann vorgesehen sein, dass die Sperrvorrichtung eine Bewegungsvorrichtung umfasst, mittels welcher das eine oder die mehreren Sperrelemente aus einer Sperrstellung zum Sperren des Fluiddurchgangs in eine Freigabestellung zum Freigeben des Fluiddurchgangs bringbar sind. Die Bewegungsvorrichtung kann dabei einen vollständigen Bewegungsablauf erwirken oder nur eine Teilbewegung ermöglichen, unterstützen oder dämpfen, beispielsweise mittels eines oder mehrerer Pufferelemente oder eines oder mehrerer Anschlagdämpfer.

Alternativ oder ergänzend hierzu kann vorgesehen sein, dass die Sperrvorrichtung eine Bewegungsvorrichtung umfasst, mittels welcher das eine oder die mehreren Sperrelemente aus einer Freigabestellung zum Freigeben des Fluiddurchgangs in eine Sperrstellung zum Sperren des Fluiddurchgangs bringbar sind.

Die Bewegungsvorrichtung kann somit eine monodirektionale Bewegung des einen oder der mehreren Sperrelemente bewirken oder aber eine bidirektionale Bewegung. Wenn mittels der Bewegungsvorrichtung lediglich eine monodirektionale Bewegung bewirkt wird oder bewirkbar ist, kann die entgegengesetzte Bewegung beispielsweise manuell und/oder durch anderweitige Betätigung des einen oder der mehreren Sperrelemente bewirkt werden, beispielsweise durch direkte oder indirekte Betätigung mittels des Filtermoduls.

Zum Bewegen des einen oder der mehreren Sperrelemente umfasst die Bewegungsvorrichtung vorzugsweise einzelne oder mehrere elektrische und/oder mechanische Antriebselemente, beispielsweise Motoren und/oder Federelemente.

Das eine oder die mehreren Sperrelemente sind erfindungsgemäß durch und/oder aufgrund einer Bewegung des Filtermoduls selbst bewegbar, insbesondere in die Sperrstellung und/oder in die Freigabestellung bringbar.

Alternativ hierzu kann vorgesehen sein, dass das eine oder die mehreren Sperrelemente unabhängig von einer Bewegung des Filtermoduls selbst bewegbar, insbesondere automatisch in die Sperrstellung und/oder in die Freigabestellung bringbar, sind.

Bei einer beispielhaften Ausführungsform kann vorgesehen sein, dass durch die Bewegung des Filtermoduls ein oder mehrere Sperrelemente in die Sperrstellung und/oder in die Freigabestellung bringbar sind. Beispielsweise kann ein durch zwei Sperrelemente gebildetes Tor durch Einschieben des Filtermoduls in die Filtermodulaufnahme geöffnet werden. Beim Entfernen des Filtermoduls können die beiden Sperrelemente beispielsweise mittels eines Federmechanismus in die Sperrstellung gebracht werden.

Optional können die Sperrvorrichtung und/oder die Bewegungsvorrichtung eine oder mehrere Hilfsvorrichtungen zur Erleichterung oder Vereinfachung
einer Bewegung des einen oder der mehreren Sperrelemente aufweisen. Beispielsweise können als Hilfsvorrichtung ein Seilzugmechanismus oder ein Hebelmechanismus oder ein Abstandshalter vorgesehen sein, mittels welcher eine Krafteinleitung auf ein oder mehrere Sperrelemente zur Bewegung derselben optimiert wird, beispielsweise durch Ermöglichung günstiger Hebelverhältnisse.

Ein Hebelmechanismus kann beispielsweise so ausgebildet sein, dass die Bewegung eines oder mehrerer Sperrelemente in die Sperrstellung und in die Freigabestellung unterstützt wird. Alternativ hierzu kann eine Unterstützung der Bewegung in nur eine dieser Stellungen vorgesehen sein, während die Bewegung in die andere Stellung nicht unterstützt wird. Hierfür kann beispielsweise ein Hebel durch einen Federmechanismus mit Anschlag so gestaltet sein, dass er nur in einer Richtung eine Kraft übertragen kann, während er in der anderen Richtung aus seiner Position ausgelenkt werden und anschließend selbsttätig in diese zurückkehren kann.

Es kann vorgesehen sein, dass die Bewegungsvorrichtung eine Linearführung umfasst, mittels welcher ein oder mehrere Sperrelemente zur Durchführung einer Translationsbewegung führbar sind, insbesondere zur Bewegung derselben in die Sperrstellung und/oder in die Freigabestellung.

Mittels der Linearführung sind ein oder mehrere Sperrelemente vorzugsweise linear verfahrbar oder linear verschiebbar, insbesondere in einen Fluiddurchgang hinein und/oder vor einen Fluiddurchgang.

Eine Linearführung ist oder umfasst vorzugsweise eine oder mehrere Führungsschienen, wobei ein oder mehrere Sperrelemente vorzugsweise mittels eines Rollenlagers und/oder mittels eines Gleitlagers an der einen oder den mehreren Führungsschienen verfahrbar oder verschiebbar festgelegt sind.

Die Linearführung, insbesondere die eine oder die mehreren Führungsschienen, ist vorzugsweise an der Grundkonstruktion angeordnet oder ausgebildet.

Eine Linearführung ist beispielsweise an oder in einem Rohgasschacht der Filteranlage vorgesehen oder angeordnet, insbesondere zur linear verschiebbaren oder verfahrbaren Aufnahme eines oder mehrerer innerhalb des Rohgasschachts bewegbaren Sperrelemente.

Eine Linearführung kann beispielsweise eine Hängeführung sein, bei welcher ein oder mehrere Sperrelemente unterhalb einer oder mehrerer Führungsschienen angeordnet und hängend daran geführt sind. Alternativ oder ergänzend hierzu kann vorgesehen sein, dass ein oder mehrere Sperrelemente oberhalb einer oder mehrerer Führungsschienen, insbesondere auf der einen oder den mehreren Führungsschienen, geführt sind.

Alternativ oder ergänzend zu einer Linearführung kann vorgesehen sein, dass die Bewegungsvorrichtung eine Rotationsführung umfasst, mittels welcher ein oder mehrere Sperrelemente zur Durchführung einer Rotationsbewegung führbar sind, insbesondere zur Bewegung derselben in die Sperrstellung und/oder in die Freigabestellung.

Mittels der Rotationsführung sind ein oder mehrere Sperrelemente vorzugsweise drehbar oder schwenkbar, insbesondere in einen Fluiddurchgang hineindrehbar oder hineinschwenkbar und/oder vor einen Fluiddurchgang drehbar oder schwenkbar.

Eine Rotationsführung ist oder umfasst vorzugsweise ein Drehgelenk, ein Scharnier und/oder eine ähnliche Dreh- oder Schwenkeinrichtung zum rotativen Bewegen eines oder mehrerer Sperrelemente.

Eine Rotationsachse der rotativen Bewegung des einen oder der mehreren Sperrelemente ist vorzugsweise zumindest näherungsweise vertikal ausgerichtet.

Alternativ oder ergänzend hierzu kann vorgesehen sein, dass eine Rotationsachse der rotativen Bewegung des einen oder der mehreren Sperrelemente zumindest näherungsweise horizontal ausgerichtet ist.

Es kann vorgesehen sein, dass ein oder mehrere Sperrelemente oder sämtliche Sperrelemente jeweils exakt einem Fluiddurchgang zugeordnet sind und/oder ausschließlich dem Sperren oder Freigeben des jeweiligen Fluiddurchgangs dienen. Beispielsweise kann vorgesehen sein, dass einem oder mehreren Fluiddurchgängen, insbesondere sämtlichen Fluiddurchgängen, jeweils exakt ein, zwei oder drei Sperrelemente zugeordnet sind. Bei zwei Sperrelementen pro Fluiddurchgang kann beispielsweise ein zumindest näherungsweise mittiger Verschluss des Fluiddurchgangs vorgesehen sein, das heißt, dass die Sperrelemente in der Sperrstellung zumindest näherungsweise mittig im Fluiddurchgang aneinander angrenzen.

Alternativ oder ergänzend hierzu kann vorgesehen sein, dass mindestens ein Sperrelement der Sperrvorrichtung mehreren Fluiddurchgängen zugeordnet ist, um wahlweise unterschiedliche Fluiddurchgänge mittels desselben mindestens einen Sperrelements zu sperren oder freizugeben.

Insbesondere ist dabei zu jedem gegebenen Zeitpunkt stets nur ein einziger Fluiddurchgang zumindest näherungsweise vollständig oder zumindest größtenteils sperrbar.

Vorzugsweise sind mittels des mindestens einen Sperrelements nacheinander verschiedene Fluiddurchgänge sperrbar, wobei die übrigen Fluiddurchgänge dann jeweils vorzugsweise freigegeben sind.

Günstig kann es sein, wenn ein oder mehrere Sperrelemente oder sämtliche Sperrelemente der Sperrvorrichtung jeweils in eine Aufbewahrungsposition, insbesondere exakt eine Aufbewahrungsposition, oder in mehrere Aufbewahrungspositionen bringbar sind.

Das eine oder die mehreren Sperrelemente oder sämtliche Sperrelemente sind in der jeweiligen Aufbewahrungsposition vorzugsweise beabstandet von dem einen oder den mehreren Fluiddurchgängen oder beabstandet von sämtlichen Fluiddurchgängen angeordnet.

Eine beabstandete Anordnung ist dabei insbesondere eine Anordnung derart, dass das eine oder die mehreren Sperrelemente oder sämtliche Sperrelemente vorzugsweise nicht unmittelbar an einen der bedarfsweise hiermit zu sperrenden Fluiddurchgänge angrenzen.

Eine Aufbewahrungsposition ist beispielsweise in einer Nische und/oder an einer nicht mit Filtermodulaufnahmen versehenen Seitenwandung der Grundkonstruktion vorgesehen oder durch eine Nische und/oder in oder vor einer nicht mit Filtermodulaufnahmen versehenen Seitenwandung der Grundkonstruktion gebildet.

Eine Aufbewahrungsposition kann beispielsweise an einem Ende einer Linearführung einer Bewegungsvorrichtung angeordnet oder ausgebildet sein.

Ferner kann vorgesehen sein, dass an beiden Enden der Linearführung der Bewegungsvorrichtung jeweils eine Aufbewahrungsposition angeordnet oder ausgebildet ist.

Zwischen benachbarten Filtermodulaufnahmen ist vorzugsweise jeweils eine Zwischenwand angeordnet.

Die Zwischenwand erstreckt sich beispielsweise durchgängig von einer Einlassöffnung der Filtermodulaufnahme bis zu einer Zugangsöffnung der Filtermodulaufnahme, insbesondere von dem Rohgasschacht bis zu einer dem Rohgasschacht abgewandten Außenwand der Filtermodulaufnahme. Hierdurch kann insbesondere eine vollständige Einhausung einer jeden Filtermodulaufnahme für sich genommen erhalten werden.

Alternativ hierzu kann es vorgesehen sein, dass die Zwischenwand von dem Rohgasschacht beabstandet ist und dass somit beabstandet von dem Rohgasschacht beispielsweise eine zweiseitige oder dreiseitige oder vierseitige, insbesondere tunnelartige, Einhausung der Filtermodulaufnahme gebildet ist.

Günstig kann es sein, wenn ein oder mehrere Sperrelemente in einer Freigabestellung derselben an eine zwischen zwei Filtermodulaufnahmen und/oder zwischen zwei Filtermodulen angeordnete Zwischenwand der Filteranlage anlegbar oder angelegt sind.

Alternativ oder ergänzend hierzu kann vorgesehen sein, dass ein oder mehrere Sperrelemente in einer Freigabestellung derselben in einen zwischen zwei Filtermodulaufnahmen und/oder zwischen zwei Filtermodulen angeordneten Zwischenbereich der Filteranlage bringbar oder darin angeordnet sind.

Es kann vorgesehen sein, dass zwei voneinander verschiedenen Fluiddurchgängen zugeordnete Sperrelemente in einer Freigabestellung derselben an einer gemeinsamen Zwischenwand anlegbar oder angelegt sind.

Alternativ oder ergänzend hierzu kann vorgesehen sein, dass zwei voneinander verschiedenen Fluiddurchgängen zugeordnete Sperrelemente in einer Freigabestellung derselben in einen gemeinsamen Zwischenbereich einbringbar oder darin angeordnet sind.

Günstig kann es sein, wenn Sperrelemente, welche benachbart zueinander angeordneten Filtermodulaufnahmen zugeordnet sind, längs einer Förderrichtung und/oder parallel zu einer Haupterstreckungsrichtung einer Seitenwandung des Rohgasschachts aufeinanderfolgend, insbesondere fluchtend, angeordnet sind.

Alternativ hierzu kann vorgesehen sein, dass Sperrelemente, welche benachbart zueinander angeordneten Filtermodulaufnahmen zugeordnet sind, in einer horizontal und senkrecht zur Förderrichtung und/oder senkrecht zu einer Haupterstreckungsebene einer Seitenwandung des Rohgasschachts verlaufenden Querrichtung versetzt zueinander angeordnet sind. Hierdurch kann vorzugsweise eine optimierte Bauraumnutzung erzielt werden.

Erfindungsgemäß ist vorgesehen, dass der Fluiddurchgang innerhalb der Filtermodulaufnahme angeordnet ist.

Der Fluiddurchgang ist erfindungsgemäß beabstandet von einer Einlassöffnung der Filtermodulaufnahme angeordnet, durch welche der Rohgasstrom von der Grundkonstruktion in die Filtermodulaufnahme und/oder von der Grundkonstruktion in das in der Filtermodulaufnahme angeordnete Filtermodul strömt oder führbar ist.

Alternativ oder ergänzend hierzu kann vorgesehen sein, dass der Fluiddurchgang beabstandet ist von einer Zugangsöffnung der Filtermodulaufnahme, durch welche das Filtermodul in die Filtermodulaufnahme einbringbar oder aus derselben entfernbar ist.

Beispielsweise kann vorgesehen sein, dass der Fluiddurchgang angeordnet ist zwischen a) einer Einlassöffnung der Filtermodulaufnahme, durch welche der Rohgasstrom von der Grundkonstruktion in die Filtermodulaufnahme und/oder von der Grundkonstruktion in das in der Filtermodulaufnahme angeordnete

Filtermodul strömt oder führbar ist, und b) einer Zugangsöffnung der Filtermodulaufnahme, durch welche das Filtermodul in die Filtermodulaufnahme einbringbar oder aus derselben entfernbar ist.

Günstig kann es sein, wenn der Fluiddurchgang eine Einlassöffnung einer Filtermodulaufnahme ist, durch welche der Rohgasstrom von der Grundkonstruktion in die Filtermodulaufnahme und/oder von der Grundkonstruktion in das in der Filtermodulaufnahme angeordnete Filtermodul strömt oder führbar ist. Hierbei kann insbesondere ein Abdecken des Fluiddurchgangs mittels mindestens eines Sperrelements zum Sperren des Fluiddurchgangs vorgesehen sein.

Zur zusätzlichen Reduktion eines denkbaren Austritts von Verunreinigungen kann es vorteilhaft sein, wenn zwischen dem Fluiddurchgang und einer Zugangsöffnung der Filtermodulaufnahme, durch welche das Filtermodul in die Filtermodulaufnahme einbringbar oder aus derselben entfernbar ist, eine Dichtungsvorrichtung angeordnet ist, beispielsweise eine Bürstendichtung und/oder eine Lippendichtung.

Die Dichtungsvorrichtung ist vorzugsweise bezüglich einer Bewegungsrichtung des mindestens einen Filtermoduls beim Einbringen oder Entfernen desselben in bzw. aus der jeweiligen Filtermodulaufnahme zwischen dem Fluiddurchgang und der Zugangsöffnung angeordnet.

Die Dichtungsvorrichtung dichtet insbesondere zwischen oder an einer Zwischenwand zwischen zwei Filtermodulaufnahmen und/oder zwischen oder in einem Zwischenbereich zwischen zwei Filtermodulaufnahmen ab.

Die Dichtungsvorrichtung ist beispielsweise an der Zwischenwand festgelegt und ragt in einen Innenraum der Filtermodulaufnahme hinein.

Vorzugsweise liegt die Dichtungsvorrichtung in einem Filterzustand des Filtermoduls, in welchem das Filtermodul in der Filtermodulaufnahme angeordnet ist, an einem Gehäuse des Filtermoduls an, beispielsweise an einer oder zwei Seitenwänden des Gehäuses des Filtermoduls und/oder an einer Deckenwand des Gehäuses des Filtermoduls und/oder an einer Bodenwand des Gehäuses des Filtermoduls.

Beim Einbringen des Filtermoduls in die Filtermodulaufnahme gelangt das Filtermodul vorzugsweise zuerst mit der Dichtungsvorrichtung in Eingriff, bevor der Fluiddurchgang durch gleichzeitiges oder zeitversetztes Bewegen eines oder mehrerer Sperrelemente oder sämtlicher Sperrelemente in die Freigabestellung freigegeben wird.

Beim Entfernen des Filtermoduls von oder aus der Filtermodulaufnahme gelangt das Filtermodul vorzugsweise frühestens dann mit der Dichtungsvorrichtung außer Eingriff, wenn der Fluiddurchgang mittels eines oder mehrerer Sperrelemente gesperrt ist. Vorteilhaft kann es sein, wenn das Filtermodul in einer Warteposition verbleibt, bis der zugehörige Fluiddurchgang gesperrt ist, wobei in der Warteposition vorzugsweise die Dichtungsvorrichtung mit dem Filtermodul in Eingriff ist.

Günstig kann es sein, wenn die Filteranlage, insbesondere die Sperrvorrichtung oder die Bewegungsvorrichtung, eine Sensorvorrichtung umfasst, mittels welcher ein Zustand einzelner oder mehrerer oder sämtlicher Sperrelemente und/oder ein Zustand einzelner oder mehrerer oder sämtlicher Fluiddurchgänge erfassbar oder ermittelbar ist.

Zudem kann eine Steuervorrichtung zur Steuerung der Filteranlage vorgesehen sein, insbesondere in Abhängigkeit von einem oder mehreren mittels der Sensorvorrichtung erfassten oder ermittelten Wert.

Es kann vorgesehen sein, dass ein Filtermodul nur dann aus der Filtermodulaufnahme entfernbar ist, beispielsweise aus der Warteposition wegbewegbar ist, wenn mittels der Sensorvorrichtung erfasst oder ermittelt wurde, dass der dieser Filtermodulaufnahme zugeordnete Fluiddurchgang gesperrt ist.

Insbesondere kann vorgesehen sein, dass eine mechanische oder elektrische Entriegelung oder sonstige Freigabe des Filtermoduls erst erfolgt, wenn mittels der Sensorvorrichtung erfasst oder ermittelt wurde, dass der dieser Filtermodulaufnahme zugeordnete Fluiddurchgang gesperrt ist.

Günstig kann es sein, wenn ein oder mehrere Sperrelemente der Führung und/oder Positionierung eines Filtermoduls innerhalb der Filtermodulaufnahme und/oder relativ zur Einlassöffnung dienen. Beispielsweise kann das Filtermodul zwischen zwei Sperrelementen geführt und dadurch zentriert werden. Alternativ oder ergänzend hierzu kann vorgesehen sein, dass eine oder mehrere Zwischenwände oder eine oder mehrere Dichtungsvorrichtungen der Führung und/oder Positionierung eines Filtermoduls innerhalb der Filtermodulaufnahme und/oder relativ zur Einlassöffnung dienen.

Insbesondere zur Durchführung eines Abscheidevorgangs ist das mindestens eine Filtermodul vorzugsweise mittels einer Arretiereinrichtung und/oder Verriegelungseinrichtung der Sperrvorrichtung und/oder der Bewegungsvorrichtung in der Filtermodulaufnahme fixierbar oder fixiert.

Bei einer Ausgestaltung der Erfindung kann vorgesehen sein, dass die Filteranlage eine Lüftungsvorrichtung zum Belüften und/oder Entlüften der mindestens einen Filtermodulaufnahme umfasst, insbesondere zum Belüften und/oder Entlüften eines Raums zwischen der Einlassöffnung der Filtermodulaufnahme und dem mindestens einen Sperrelement, welches dieser Filtermodulaufnahme zugeordnet ist. Hierdurch kann vorzugsweise ein Überdruck und/oder ein Unterdruck beim Einbringen oder Entfernen eines Filtermoduls ausgeglichen werden. Das Belüften und/oder Entlüften kann beispielsweise nur während eines Filtermodulwechsels oder unmittelbar nach einem Filtermodulwechsel erfolgen.

Beispielsweise kann nach einem Zuführen eines unbeladenen Filtermoduls, insbesondere automatisch, für einen vorgegebenen Zeitraum ein Belüftungsvorgang und/oder Entlüftungsvorgang durchgeführt werden.

Alternativ hierzu kann ein kontinuierliches oder regelmäßiges, insbesondere ein sich periodisch wiederholendes, Belüften und/oder Entlüften vorgesehen sein.

Bei einem Belüftungsvorgang erfolgt vorzugsweise ein Luftaustausch derart, dass ein Volumen der zugeführten Zuluft, insbesondere Frischluft, und/oder ein Volumen der abgeführten Abluft ein Vielfaches, insbesondere mindestens ungefähr das Dreifache, vorzugsweise mindestens ungefähr das Fünffache, und/oder höchstens ungefähr das Zehnfache, des zu belüftenden Raumvolumens beträgt.

Optional kann der Raum zwischen der Einlassöffnung der Filtermodulaufnahme und dem mindestens einen Sperrelement, welches dieser Filtermodulaufnahme zugeordnet ist, auf einem vorgegebenen Druck (Über- oder Unterdruck) relativ zu einem Druck im Behandlungsraum und/oder Rohgasschacht und/oder relativ zu einer Umgebung der Filteranlage gehalten werden, insbesondere durch geeignete Steuerung und/oder Regelung der Lüftungsvorrichtung.

Bei einer Ausgestaltung kann vorgesehen sein, dass die Filteranlage für jede Filtermodulaufnahme zwei Sperrelemente umfasst, welche beispielsweise als Klappenelemente ausgebildet sind und/oder an einander gegenüberliegenden Seiten einer jeden Filtermodulaufnahme mittels Rotationsführungen drehbar gehalten sind, insbesondere um eine im Wesentlichen vertikale Achse. Die Sperrelemente sind insbesondere Pendeltüren, welche vorzugsweise paarweise für jede Filtermodulaufnahme vorgesehen sind.

Die Sperrelemente sind beispielsweise mit jeweils einem Betätigungshebel oder einem sonstigen Betätigungselement versehen, an welchem ein Filtermodul beim Einschieben desselben angreift, um die Sperrelemente in eine Offenstellung zu bringen.

Die Filtermodule weisen vorzugsweise jeweils zwei Schienenelemente auf, wobei jedem Betätigungshebel jeweils ein Schienenelement zugeordnet ist. Die Betätigungshebel sind insbesondere durch die Schienenelemente auslenkbar oder betätigbar und/oder an den Schienenelementen entlangführbar. Mittels der Betätigungshebel und der Schienenelemente sind die Sperrelemente vorzugsweise beabstandet von dem jeweiligen Filtermodul in einer Offenstellung gehalten oder haltbar.

Günstig kann es sein, wenn eine oder mehrere oder sämtliche Filtermodulaufnahmen mit jeweils einem oder mehreren Führungselementen einer Führungsvorrichtung versehen sind. Die Führungselemente sind insbesondere Leitbleche, Leitplanken oder Schienen zur Positionierung und/oder Führung der Filtermodule, um eine korrekte Zuführung und eine optimierte Abdichtung an den Filtermodulaufnahmen zu erhalten.

Die Führungselemente erstrecken sich vorzugsweise über eine Länge längs einer Einschubrichtung der Filtermodule in die Filtermodulaufnahmen, welche mindestens ungefähr 30 %, vorzugsweise mindestens ungefähr 60 %, einer Gesamterstreckung der jeweiligen Filtermodulaufnahme und/oder des jeweiligen Filtermoduls in dieser Einschubrichtung beträgt.

Eine Dichtungsvorrichtung zum Abdichten eines Spaltbereichs zwischen den Filtermodulaufnahmen und den Filtermodulen umfasst insbesondere eine oder mehrere Bürstendichtungen oder Lippendichtungen, insbesondere Bürstenelemente oder Lippenelemente, beispielsweise Gummilippen.

An Seitenwandungen oder Seitenbereichen der Filtermodulaufnahmen und/oder an Deckenwandungen oder Deckenbereichen der Filtermodulaufnahmen sind vorzugsweise eine oder mehrere Bürstendichtungen, insbesondere Bürstenelemente, angeordnet. Alternativ oder ergänzend hierzu kann vorgesehen sein, dass an Bodenwandungen oder Bodenbereichen der Filtermodulaufnahmen eine oder mehrere Bürstendichtungen, insbesondere Bürstenelemente, angeordnet sind.

An Bodenwandungen oder Bodenbereichen der Filtermodulaufnahmen sind vorzugsweise eine oder mehrere Lippendichtungen, insbesondere Lippenelemente, beispielsweise Gummilippen, angeordnet. Beispielsweise können eine oder mehrere Lippendichtungen und/oder eine oder mehrere Bürstendichtungen derart in oder an den Filtermodulaufnahmen angeordnet sein, dass hiermit ein zwischen Transportrollen des jeweils einzuführenden Filtermoduls befindlicher Bereich abdichtbar ist. Eine Lippendichtung ist insbesondere eine Zusatzdichtung, welche zusätzlich zu Bürstendichtungen der Dichtungsvorrichtung vorgesehen ist.

Vorteilhaft kann es sein, wenn eine oder mehrere Bürstendichtungen, insbesondere Bürstenelemente, in einem Bodenbereich oder Bodenabschnitt der Sperrelemente angeordnet oder ausgebildet sind. Mittels derartiger Bürstendichtungen ist insbesondere ein Spaltbereich zwischen den Sperrelementen und dem Boden der Filteranlage im Sperrzustand (geschlossenen Zustand) der Sperrelemente abdichtbar.

Zur Überwachung und/oder zur Anwesenheits- und/oder Funktionskontrolle der Filteranlage sind vorzugsweise ein oder mehrere Sensorelemente an einer oder mehreren, insbesondere sämtlichen, Filtermodulaufnahmen angeordnet. Die Detektion und/oder Überwachung oder Kontrolle eines in der jeweiligen Filtermodulaufnahme angeordneten Filtermoduls kann beispielsweise mit einem Gegenstück, welches mit dem Sensorelement zusammenwirkt, optimiert werden. Das Gegenstück kann ein passives oder aktives Element sein. Beispielsweise kann das Gegenstück ein Positionsmarker sein. Ferner kann vorgesehen sein, dass das Gegenstück ein Informationsträger ist oder einen solchen umfasst. Ein Informationsträger ist beispielsweise ein RFID-Element oder ein Barcode.

Die Sensorelemente können insbesondere im Bereich der Einlassöffnung angeordnet sein. Ferner kann eine Anordnung der Sensorelemente außerhalb eines mittels der Sperrelemente von dem Rohgasschacht abgetrennten Bereichs vorgesehen sein, beispielsweise an einer Außenseite einer Wandung, an welcher oder in welcher die Sperrelemente angeordnet oder integriert sind. Ein oder mehrere Gegenstücke sind vorzugsweise komplementär zur Positionierung der Sensorelemente derart an den Filtermodulen angeordnet, dass die Gegenstücke und die Sensorelemente im vollständig eingeschobenen Zustand der Filtermodule in den Filtermodulaufnahmen miteinander wechselwirken können oder zumindest die Sensorelemente das jeweilige Gegenstück erfassen können.

Im geschlossenen Zustand (Sperrzustand) der Sperrelemente sind die Sperrelemente vorzugsweise längs einer gemeinsamen, im Wesentlichen vertikalen Ebene ausgerichtet, welche insbesondere zwischen der Einlassöffnung und der Zugangsöffnung einer jeden Filtermodulaufnahme verläuft. Diese Ebene bildet insbesondere eine parallel zu dem Rohgasschacht verlaufende, nach außen versetzte Wandung.

Beispielhaft seien zudem die folgenden Ausführungsbeispiele von Sperrvorrichtungen genannt:

### Ausführungsbeispiel A

Bei Ausführungsbeispiel A ist vorgesehen, dass jedem Fluiddurchgang jeweils zwei als Schwenktore oder Schwenktorelemente ausgebildete Sperrelemente zugeordnet sind. Die Schwenktore können beispielsweise aus Blech und/oder Kunststoff gebildet sein. Beispielsweise können die Schwenktore einen Rahmen umfassen, welcher mit einer Plane oder Folie, beispielsweise aus Kunststoff, versehen, insbesondere bespannt, ist.

### Ausführungsbeispiel B

Bei Ausführungsbeispiel B ist ein Schiebetor als Sperrelement vorgesehen, welches insbesondere als senkrecht hängendes Wandelement in dem den Rohgasstrom führenden Teil der Grundkonstruktion, insbesondere innerhalb des Rohgasschachts, angeordnet ist. Das Sperrelement ist insbesondere entlang der (Außen-)Wandung verschiebbar angeordnet, welche die Einlassöffnungen der Filtermodulaufnahmen umfasst. Das Schiebetor ist oberhalb der Einlassöffnungen aufgehängt und geführt. Darunter hängt es berührungslos vor der (Außen-)Wandung bzw. den Einlassöffnungen. Um ein Kippen und/oder Schwingen des Sperrelements zu verhindern, ist die Aufhängung und/oder Führung desselben beispielsweise mittels einer Linearführung in mindestens zwei Ebenen übereinander ausgeführt. Beispielsweise kann das Sperrelement in einer oberen Führungsschiene zur Aufnahme seiner Gewichtskraft eingehängt sein, während es gegen eine weitere Führungsschiene darunter (nur) in horizontaler Richtung, beispielsweise durch eine Rollenvorrichtung, abgestützt wird, um eine Kippbewegung aus der vertikalen Lage zu verhindern.

Das Sperrelement des Ausführungsbeispiels B kann vorzugsweise längs der Wandung bewegt werden, so dass es vor jeder Einlassöffnung positionierbar ist, um diese zu verschließen. Der Antrieb des Sperrelements kann beispielsweise durch einen Seil- oder Kettenzug realisiert sein. Vorzugsweise bewegt sich das Sperrelement in einem Abstand von mindestens ungefähr 1 cm, insbesondere mindestens ungefähr 3 cm, von der (Außen-)Wandung entfernt. Hierdurch kann vorzugsweise eine Beeinträchtigung der Bewegung aufgrund von Verunreinigungsanhaftungen, insbesondere Lackanhaftungen, verhindert werden. Auch in der Sperrposition (Verschlussposition) des Sperrelements vor einer Einlassöffnung bleibt dieser Abstand bestehen. Das bedeutet, dass bei geschlossener Einlassöffnung um diese ein umlaufender Spalt offenbleibt. Ein Austritt von Rohgas durch diesen Spalt wird vorzugsweise dadurch ausgeschlossen, dass innerhalb des Rohgasschachts ein (geringer) Unterdruck gegenüber der Umgebung und/oder gegenüber dem Druck in der Filtermodulaufnahme vorliegt.

Günstig kann es sein, wenn die Führungsschienen und/oder Antriebskomponenten (beispielsweise Zugseil, Umlenkrollen, etc.) innerhalb einer Einhausung angeordnet sind, die nur auf ihrer Unterseite eine schlitzförmige Öffnung aufweist. Aus dieser Öffnung ragen das Sperrelement oder ein oder mehrere das Sperrelement tragende Elemente heraus. Die Einhausung kann beispielsweise aufklappbar ausgeführt sein, so dass sie zu Wartungs- und Reinigungszwecken leicht geöffnet werden kann.

Bei dem Ausführungsbeispiel B kann das Sperrelement entweder kontinuierlich bewegt werden, wenn keine Einlassöffnung und somit kein Fluiddurchgang gesperrt werden soll, oder es kann das Sperrelement in eine Parkposition (Aufbewahrungsposition) bewegt werden. Die Parkposition ist so gewählt, dass keine Einlassöffnung durch das Sperrelement verdeckt wird und/oder dass das Sperrelement einer möglichst geringen Verunreinigung, beispielsweise durch Lackpartikel, ausgesetzt ist. Die Parkposition kann beispielsweise an einer Stirnseite des Rohgasschachts vorgesehen sein, insbesondere bezüglich einer Förderrichtung einer Fördervorrichtung der Lackieranlage. Dort kann das Sperrelement entweder parallel zur Wandung an der Stirnseite, das heißt senkrecht zur Bewegungsrichtung desselben vor den Einlassöffnungen, angeordnet sein.

Alternativ kann der Rohgasschacht beispielsweise an der Stirnseite, insbesondere in Längsrichtung, eine Ausbuchtung oder Nische aufweisen, in die das Sperrelement einbringbar ist, insbesondere eingefahren werden kann.

Für die Überwachung der Position des Sperrelements können beispielsweise entlang der Wandung Näherungsschalter oder sonstige Sensorelemente einer Sensorvorrichtung vorgesehen sein, wobei diese vorzugsweise durch die Kabinenwand geführt sind und/oder so positioniert sind, dass ein Sensorkopf mindestens eines Sensorelements innerhalb der Einhausung für die Führungsschienen sitzt.

Das Signal dieser Sensoren kann als Freigabekriterium für das Entfernen eines Filtermoduls genutzt werden. Insbesondere kann vorgesehen sein, dass ein Filtermodul nur von einer Filtermodulaufnahme entfernt werden darf, solange die zugehörige Einlassöffnung durch das Sperrelement verdeckt ist. Optional können die Filtermodule ferner mit Verriegelungen am Rohgasschacht angeschlossen sein, die sich nur dann öffnen lassen, wenn ein Entfernen zulässig ist.

### Ausführungsbeispiel C

Ausführungsbeispiel C ist eine Kombination von Ausführungsbeispiel A mit Ausführungsbeispiel B. Das verschiebbare Sperrelement gemäß Ausführungsbeispiel B ist dabei außerhalb des Rohgasschachts angeordnet. Eine zusätzliche Wand mit durch ein Schiebetor verschließbaren Öffnungen befindet sich dabei in so großem Abstand zur Wandung des Behandlungsraums, dass die Filtermodule in Arbeitsposition nicht in die Einlassöffnungen hineinragen oder daran angrenzen. Auf diese Weise wird vorzugsweise ermöglicht, dass das Schiebetor hinter den Filtermodulen entlang des Behandlungsraums verfahrbar ist. Führungsschienen und Antriebskomponenten (Zugseil, Umlenkrollen, etc.) sind entlang der zusätzlichen Wand oberhalb der Filtermodule angeordnet.

Bei Ausführungsbeispiel C sind Trennwände zwischen den Filtermodulen erforderlich. Diese schließen an die zusätzliche Wand an und erstrecken sich im rechten Winkel dazu zwischen die Filtermodule und/oder zwischen den Filtermodulaufnahmen. An diesen Trennwänden sowie an der Deckenwandung oberhalb der Filtermodule sind umlaufend Dichtungsvorrichtungen, beispielsweise Bürsten oder Gummilippen, installiert, die zur Abdichtung ringsum an die Filtermodule anschließen.

Analog zu Ausführungsbeispiel A kann eine Warteposition vorgesehen sein, in der das Filtermodul beim Einbringen in die Filtermodulaufnahme oder beim Entfernen aus der Filtermodulaufnhame verbleiben muss, bis der Fluiddurchgang freigegeben oder gesperrt ist. Zur Abdichtung in der Warteposition während des Sperr- oder Freigabevorgangs kann eine zusätzliche Wand mit Öffnungen und Trennwänden vorgesehen sein, die beispielsweise spiegelbildlich zur ersten angeordnet ist, das heißt die Einlassöffnungen fluchten, während die Trennwände sich von der zusätzlichen Wandung weg vom Behandlungsraum erstrecken, so dass ein Filtermodul, insbesondere ein Trolley, in Warteposition sich zwischen diesen Trennwänden befindet. Auch hier können beispielsweise Bürsten oder Gummilippen vorgesehen sein. Der Abstand zwischen den beiden Wänden ist vorzugsweise gerade so bemessen, dass das Sperrelement dazwischen verfahren werden kann.

Für die Überwachung der Position des Sperrelements können entlang der zusätzlichen Wand Näherungsschalter vorgesehen sein. Deren Signal kann als Freigabekriterium für das Entfernen eines Filtermoduls aus der Warteposition genutzt werden. Optional können Verriegelungen vorgesehen sein, die ein Entfernen eines Filtermoduls aus der Warteposition erst dann ermöglichen, wenn der Fluiddurchgang geschlossen ist.

### Ausführungsbeispiel D

Das Ausführungsbeispiel D weist einen Aufbau auf, welcher im Wesentlichen komplementär zu demjenigen gemäß Ausführungsbeispiel C ist.

Anstelle der Option, ein Sperrelement vor einer Wand mit vielen Öffnungen zu verschieben, wird eine ganze Wand mit nur einer Öffnung verschoben. Hinter den Filtermodulen befindet sich eine beispielsweise längs der Förderrichtung bewegliche Wand. Diese besteht vorzugsweise aus einem Stoff, aus Textilgewebe, aus Zeltplane oder ähnlichem und weist eine Öffnung auf, die gerade groß genug ist, dass ein Filtermodul hindurchgeführt werden kann. Die Wand, das heißt insbesondere die Öffnung, kann verfahren werden, indem sie am einen Ende auf- und am anderen Ende abgerollt wird.

Für den Wechsel eines Filtermoduls wird die Öffnung hinter diesem in Position gebracht. Nach dem Entfernen des Filtermoduls durch die Öffnung hindurch, wird die Wand mindestens so weit verfahren, dass die Öffnung nicht mehr mit der Einlassöffnung zur Zuführung des Rohgasstroms zu der Filtermodulaufnahme fluchtet.

Analog zu den vorherigen Varianten kann außerhalb der beweglichen Wand für jedes Filtermodul eine Warteposition vorgesehen sein, in der dieses verbleiben muss, bis die Öffnung geschlossen bzw. geöffnet ist.

Beidseitig der verschiebbaren Wand können analog zu den Ausführungsbeispielen B und C zwischen den Filtermodulen Zwischenwände oder Trennwandelemente vorgesehen sein, um eine Abdichtung zwischen den Filtermodulen sowie in Warteposition außerhalb der verschiebbaren Wand zu ermöglichen. Die Position der Öffnung kann sensorisch überwacht sein.

Die Führung der beweglichen Wand erfolgt vorzugsweise in Förderrichtung vorzugsweise oberhalb und unterhalb der Filtermodule, beispielsweise mittels Spannseilen. Das untere Seil kann vorzugsweise im Boden versenkt sein, so dass die Filtermodule darübergefahren werden können. Alternativ ist denkbar, dass die bewegliche Wand nur oben geführt wird und nach unten frei hängt, beispielsweise wie ein Vorhang, insbesondere ein Theatervorhang.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: einen schematischen vertikalen Schnitt durch eine erste Ausführungsform einer Lackieranlage zum Lackieren von Fahrzeugkarosserien, welche eine Filteranlage zum Reinigen eines mit Lack-Overspray beladenen Rohgasstroms umfasst;
- Fig. 2: eine schematische perspektivische Darstellung einer Filtermodulaufnahme der Filteranlage, mittels welcher ein Filtermodul zum Reinigen des Rohgasstroms aufnehmbar ist;
- Fig. 3: eine schematische Seitenansicht der Filtermodulaufnahme aus Fig. 2 und eines Filtermoduls während des Einbringens oder Entfernens des Filtermoduls in bzw. aus der Filtermodulaufnahme;
- Fig. 4: eine schematische perspektivische Darstellung einer alternativen Ausführungsform eines Filtermoduls;
- Fig. 5: eine der Fig. 1 entsprechende schematische Schnittdarstellung einer alternativen Ausführungsform einer Lackieranlage, bei welcher an Seitenwandungen der Filteranlage anlegbare Filtermodule vorgesehen sind;
- Fig. 6: eine vergrößerte Darstellung des Bereichs VI in Fig. 5;
- Fig. 7: eine schematische perspektivische, teilweise geschnittene Darstellung einer alternativen Ausführungsform einer Filteranlage, welche eine Sperrvorrichtung mit einem translatorisch bewegbaren Sperrelement umfasst;
- Fig. 8: einen schematischen vertikalen Querschnitt durch die Filteranlage aus Fig. 7;
- Fig. 9: eine vereinfachte Darstellung einer Draufsicht auf die Filteranlage aus Fig. 7;
- Fig. 10: einen schematischen horizontalen Schnitt durch eine weitere alternative Ausführungsform einer Filteranlage, bei welcher als schwenkbare Türen ausgebildete Sperrelemente einer Sperrvorrichtung vorgesehen sind;
- Fig. 11: eine vereinfachte Darstellung der Filteranlage aus Fig. 10;
- Fig. 12: eine der Fig. 11 entsprechende schematische Darstellung der Filteranlage, in vollständig eingeschobenem Zustand sämtlicher Filtermodule der Filteranlage;
- Fig. 13: eine schematische perspektivische Darstellung von Filtermodulaufnahmen und Filtermodulen einer weiteren alternativen Ausführungsform einer Filteranlage mit optimierter Sperrvorrichtung;
- Fig. 14: eine schematische perspektivische Darstellung einer Rückseite der Filtermodulaufnahmen und Filtermodule aus Fig. 13; und
- Fig. 15: eine schematische perspektivische Darstellung einer Unterseite der Filtermodulaufnahmen und Filtermodule aus Fig. 13.

Gleiche oder funktional äquivalente Elemente sind in sämtlichen Figuren mit denselben Bezugszeichen versehen.

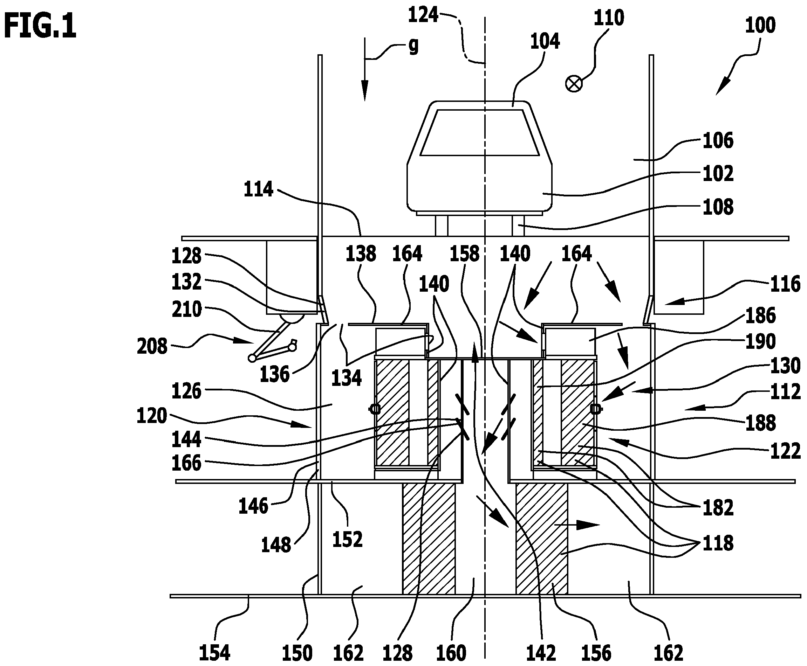

Eine in den Fig. 1 bis 4 dargestellte erste Ausführungsform einer als Ganzes mit 100 bezeichneten Lackieranlage dient dem Lackieren von Werkstücken 102, beispielsweise Fahrzeugkarosserien 104.

Die Lackieranlage 100 ist insbesondere eine Spritzlackieranlage oder Sprühlackieranlage, bei welcher ein flüssiger oder pulverförmiger Lack in Richtung des Werkstücks 102 beschleunigt wird, um das Werkstück 102 zu beschichten.

Um im Betrieb der Lackieranlage 100 eine unerwünschte Verunreinigung von nicht zu lackierenden Oberflächen zu vermeiden, wird eine Lackierkabine 106, in welcher der eigentliche Lackiervorgang stattfindet, in der Schwerkraftrichtung g von oben nach unten mit einem Luftstrom durchströmt.

Dieser Luftstrom nimmt während des Durchströmens der Lackierkabine 106 nicht an dem Werkstück 102 anhaftende Lackteilchen und/oder Lacktröpfchen auf und wird somit verunreinigt.

Der hierdurch erhältliche Gasstrom wird als Rohgasstrom bezeichnet, welcher als Verunreinigungen Lack-Overspray-Teilchen oder Lack-Overspray-Tröpfchen aufweist.

Die Lackieranlage 100 umfasst eine Fördervorrichtung 108, mittels welcher die Werkstücke 102, insbesondere die Fahrzeugkarosserien 104, in einer Förderrichtung 110 durch die Lackierkabine 106 hindurchförderbar sind.

Zur Reinigung des mit Verunreinigungen beladenen Rohgasstroms umfasst die Lackieranlage 100 eine Filteranlage 112, welche direkt unter der Lackierkabine 106 angeordnet ist und welcher der Rohgasstrom durch einen Kabinenboden 212 der Lackierkabine 106 zuführbar ist.

Die Filteranlage 112 umfasst eine Grundkonstruktion 116, insbesondere ein Gerüst oder eine Einhausung, in welchem bzw. in welcher mehrere Filtervorrichtungen 118 angeordnet sind.

Insbesondere weist die Grundkonstruktion 116 der Filteranlage 112 mehrere Filtermodulaufnahmen 120 zur Aufnahme mehrerer Filtermodule 122 auf.

Die Filtermodulaufnahmen 120 sind ortsfest an der Lackieranlage 100, insbesondere an der Filteranlage 112, angeordnet.

Die Filtermodule 122 hingegen sind vorzugsweise beweglich ausgebildet und wahlweise in die Filtermodulaufnahmen 120 einbringbar oder aus denselben entnehmbar.

Wie Fig. 1 zu entnehmen ist, sind bei der ersten Ausführungsform der Filteranlage 112 zwei Filtermodulaufnahmen 120 und zwei Filtermodule 122 bezüglich einer vertikalen Längsmittelebene 124 der Lackierkabine 100, insbesondere der Filteranlage 112, einander gegenüberliegend angeordnet und insbesondere im Wesentlichen spiegelsymmetrisch zueinander ausgebildet.

Die Filteranlage 112 umfasst zusätzlich zu den zwei dargestellten Filtermodulaufnahmen 120 und Filtermodulen 122 vorzugsweise weitere Filtermodulaufnahmen 120 und Filtermodule 122, welche vorzugsweise zwei sich längs der Förderrichtung 110 erstreckende Reihen von hintereinander angeordneten Filtermodulaufnahmen 120 und Filtermodulen 122 bilden.

Jede Filtermodulaufnahme 120 umfasst vorzugsweise einen Innenraum 126, welcher mittels der jeweiligen Filtermodulaufnahme 120 zugeordneten Verschließvorrichtungen 128 zugänglich machbar oder verschließbar ist.

Insbesondere ist mittels jeder Filtermodulaufnahme 120 ein separater Strömungskanal 130 der Filteranlage 112 gebildet. Vorzugsweise kann durch jeden Strömungskanal 130 im Wesentlichen unabhängig von den weiteren Strömungskanälen 130 ein Teil des Rohgasstroms hindurchgeführt werden.

Insbesondere kann somit bei vorhandenem Filtermodul 122 in einer Filtermodulaufnahme 120 gezielt in jedem Strömungskanal 130 ein Teil des Rohgasstroms von Verunreinigungen befreit werden, so dass dieser als Reingasstrom aus der jeweiligen Filtermodulaufnahme 120 abführbar ist.

Jede Filtermodulaufnahme 120 umfasst eine beispielsweise als Klappe 132 ausgebildete Verschließvorrichtung 128, welche beispielsweise an einer Einlassöffnung 134 der Filtermodulaufnahme 120 angeordnet ist.

Die mit der Klappe 132 versehene Einlassöffnung 134 ist insbesondere eine Bypassöffnung 136 der Filtermodulaufnahme 120.

Ferner umfasst jede Filtermodulaufnahme 120 vorzugsweise eine weitere Einlassöffnung 134, an welcher im Filterbetrieb der Filteranlage 112 eine (noch zu beschreibende) Vorfiltervorrichtung des zugehörigen Filtermoduls 122 anliegt.

Durch Öffnen oder Schließen der Klappe 132 der Bypassöffnung 136 kann somit gezielt eingestellt werden, ob der Rohgasstrom durch die Bypassöffnung 136 und/oder durch die Vorfiltervorrichtung in den Innenraum 126 der Filtermodulaufnahme 120 einströmt.

Die der Bypassöffnung 136 zuzuordnende Einlassöffnung 134 ist in einer Deckenwandung 138 der Filtermodulaufnahme 120 angeordnet.

Die weitere Einlassöffnung 134 ist in einer Seitenwandung 140 der Filtermodulaufnahme 120 angeordnet, welche der vertikalen Längsmittelebene 124 der Filteranlage 112 zugewandt angeordnet ist.

Aufgrund der einander gegenüberliegend angeordneten Paare von Filtermodulaufnahmen 120 ist mittels der Seitenwandungen 140 der Filtermodulaufnahmen 120 ein Rohgasschacht 142 gebildet, durch welchen das aus der Lackierkabine 106 abgeführte und mit Lack-Overspray verunreinigte Rohgas den Filtervorrichtungen 118 zuführbar ist.

Die Filtermodulaufnahmen 120 umfassen ferner jeweils noch mindestens eine Auslassöffnung 144, durch welche der durch die Filtermodulaufnahme 120 hindurchgeführte Gasstrom abführbar ist.

Zudem ist jeder Filtermodulaufnahme 120 eine Zugangsöffnung 146, beispielsweise eine verschließbare Türe 148, zugeordnet.

Durch die Zugangsöffnung 146, welche insbesondere in einer Außenwandung 150 der Filteranlage 112 angeordnet ist, kann ein Filtermodul 122 aus der Filtermodulaufnahme 120 entnommen oder ein Filtermodul 122 der Filtermodulaufnahme 120 zugeführt werden.

Wie Fig. 1 zu entnehmen ist, sind die Filtermodulaufnahmen 120 und entsprechend auch die Filtermodule 122 bei der dargestellten ersten Ausführungsform auf einer Ebene 152 angeordnet, welche oberhalb eines Bodens 154 angeordnet ist, auf dem wiederum die gesamte Lackieranlage 100 aufgebaut ist.

Unterhalb, insbesondere direkt unter, den Filtermodulaufnahmen 120 sind optional Zusatzfiltervorrichtungen 156 angeordnet, welche vorzugsweise von den Filtervorrichtungen 118 der Filtermodule 122 verschiedene Filtervorrichtungen 118 sind.

Wie ferner Fig. 1 zu entnehmen ist, umfassen die Seitenwandungen 140 der Filtermodulaufnahmen 120 die Auslassöffnungen 144.

Die Auslassöffnungen 144 sind bezüglich der Schwerkraftrichtung g unter den Einlassöffnungen 134 angeordnet und mittels einer Trennwand 158, welche die bezüglich der vertikalen Längsmittelebene 124 einander gegenüberliegend angeordneten Filtermodulaufnahmen 120 längs einer im Wesentlichen horizontalen Ebene miteinander verbindet, voneinander getrennt.

Der Bereich über der Trennwand 158 ist dabei der Rohgasschacht 142.

Der Bereich unter der Trennwand 158 ist derjenige Bereich, in welchen der mittels der Filtervorrichtung 118 gereinigte Gasstrom strömt und welcher daher als Reingaskanal 160 bezeichnet wird.

Durch den Reingaskanal 160 ist das aus den Filtermodulaufnahmen 120 ausströmende Reingas, welches durch Reinigung des verunreinigten Rohgases erhältlich ist, den Zusatzfiltervorrichtungen 156 zuführbar.

Die Zusatzfiltervorrichtungen 156 werden dann in im Wesentlichen horizontaler Richtung durchströmt, um die Reinheit des Reingases weiter zu erhöhen.

Schließlich wird dieses Reingas zwei Sammelkanälen 162 zugeführt, welche auf den der vertikalen Längsmittelebene 124 abgewandten Seiten der Zusatzfiltervorrichtungen 156 angeordnet sind.

Die Deckenwandung 138 einer jeden Filtermodulaufnahme 120 ist bei der in den Fig. 1 bis 4 dargestellten ersten Ausführungsform der Lackieranlage 100, insbesondere der Filteranlage 112, im Wesentlichen horizontal ausgerichtet.

Die Deckenwandung 138 bildet dabei ein Strömungsleitblech 164, mittels welchem der Rohgasstrom gezielt den Einlassöffnungen 134 zuführbar ist.

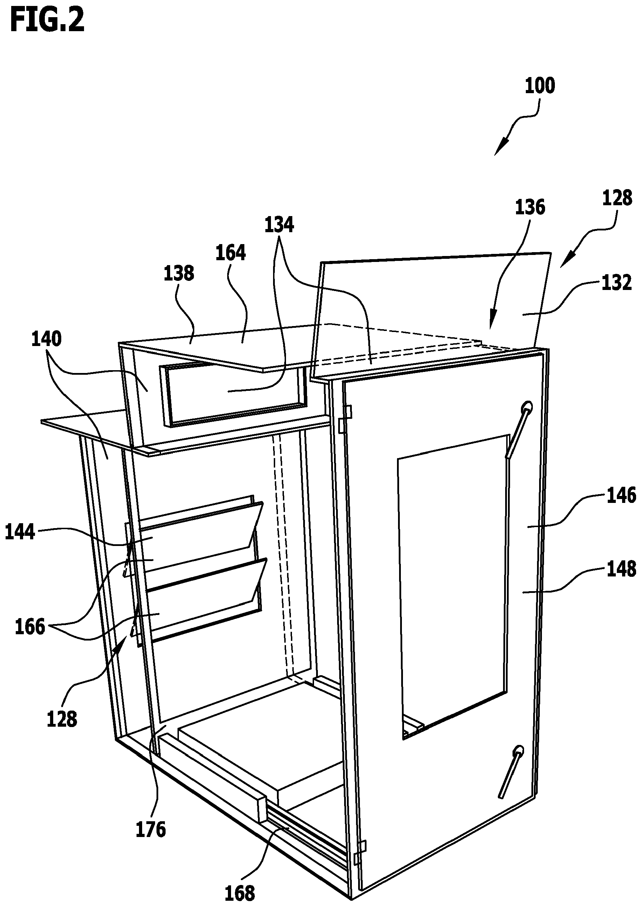

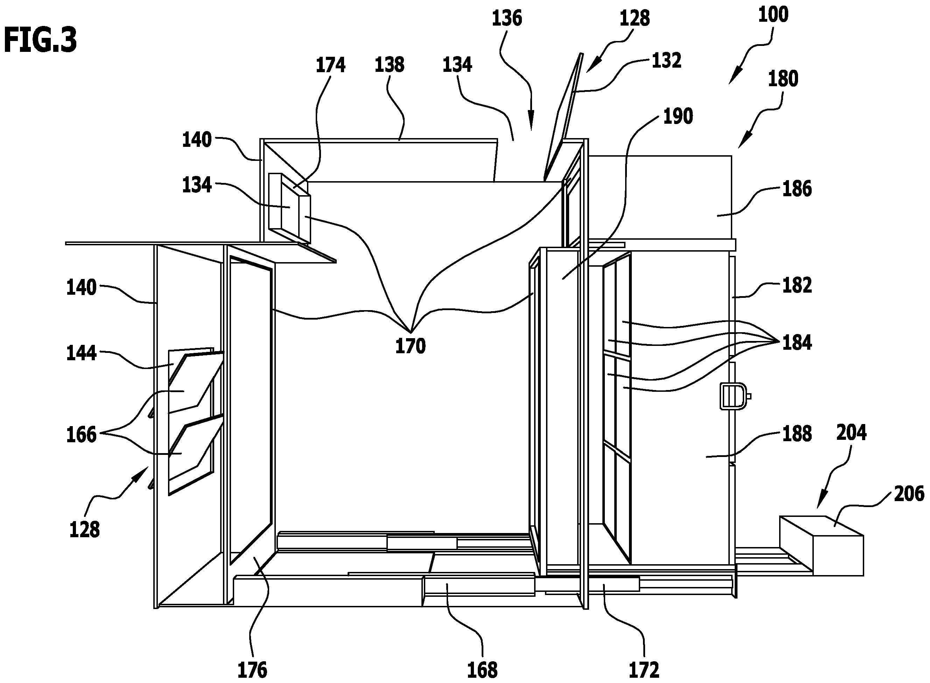

Weitere Details betreffend die Filtermodulaufnahme 120 und das Filtermodul 122 werden nachfolgend insbesondere mit Hinblick auf die Fig. 2 und 3 beschrieben.

Wie diesen Fig. 2 und 3 zu entnehmen ist, ist die Verschließvorrichtung 128 im Bereich der Auslassöffnung 144 als eine Jalousieklappe 166 ausgebildet.

Zudem ist bei der Filtermodulaufnahme 120 eine Führungsvorrichtung 168 vorgesehen.

Schließlich umfasst die Filtermodulaufnahme 120 noch mehrere Abdichtbereiche 170 zum Anlegen von hierzu korrespondierenden Abdichtbereichen 170 eines Filtermoduls 122.

Die Führungsvorrichtung 168 dient insbesondere der Bewegung, Führung und/ oder Arretierung eines Filtermoduls 122 relativ zu der Filtermodulaufnahme 120.

Die Führungsvorrichtung 168 umfasst insbesondere eine Teleskopschienenführung 172, mittels welcher ein Filtermodul 122 aus der in Fig. 1 dargestellten Filterstellung in eine Wechselstellung bringbar ist.

In der Filterstellung des Filtermoduls 122 liegen die Abdichtbereiche 170 der Filtermodulaufnahme 120 und die Abdichtbereiche 170 des Filtermoduls 122 aneinander an, so dass ein die Filtermodulaufnahme 120 und das Filtermodul 122 durchströmender Gasstrom zuverlässig einem vorgegebenen Strömungsweg folgt.

Ein erster Abdichtbereich 170 der Filtermodulaufnahme 120 ist als ein Einlassbereich 174 der in der Seitenwandung 140 angeordneten Einlassöffnung 134 ausgebildet. Der Einlassbereich 174 ist dabei insbesondere ein in den Innenraum 126 der Filtermodulaufnahme 120 hineinragender Vorsprung.

Der weitere Abdichtbereich 170 der Filtermodulaufnahme 120 ist durch ein Rahmenelement 176 gebildet, welches ein von einer Wandung der Filtermodulaufnahme 120 verschiedenes Element sein kann und im Wesentlichen parallel zur Seitenwandung 140 im Bereich der Auslassöffnung 144 verläuft.

Bei der in den Fig. 2 und 3 dargestellten Ausführungsform einer Filtermodulaufnahme 120 und eines Filtermoduls 122 ist die Führungsvorrichtung 168 wie vorstehend beschrieben als eine Teleskopschienenführung 172 ausgebildet.

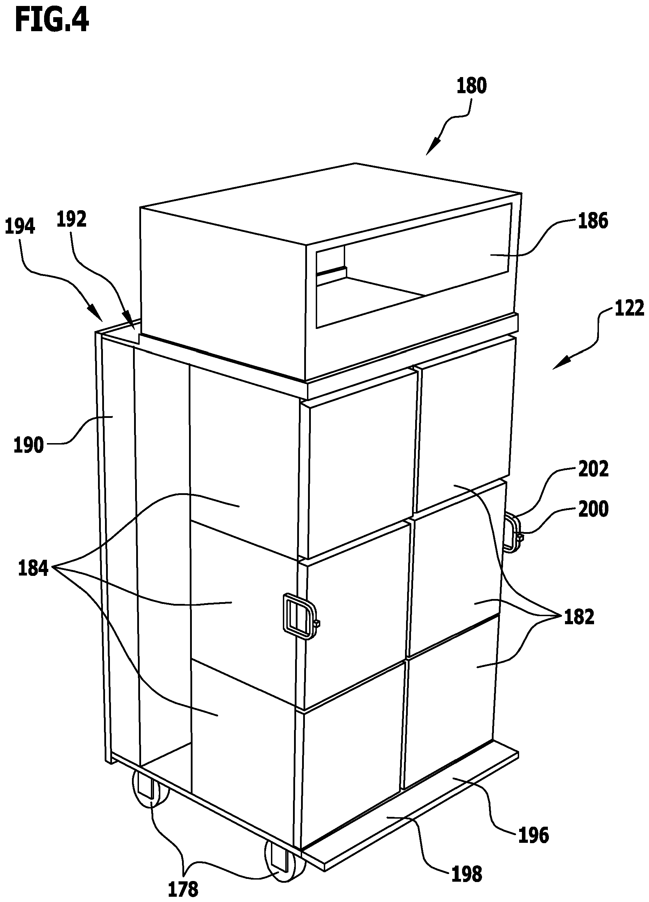

Anstelle einer solchen Teleskopschienenführung 172 kann jedoch auch eine Rollenvorrichtung 178 vorgesehen sein (siehe Fig. 4).

Das Filtermodul 122 ist vorzugsweise als ein Transportwagen 180 ausgebildet. Mittels dieses Transportwagens 180 können insbesondere mehrere Filterelemente 182 gemeinsam transportiert werden.

Das Filtermodul 122 umfasst hierzu mehrere Filterelementaufnahmen 184 zur Aufnahme mehrerer Filterelemente 182.

Die Filterelemente 182 und die Filterelementaufnahmen 184 sind vorzugsweise derart unabhängig voneinander angeordnet und/oder ausgebildet, dass einzelne Filterelemente 182 unabhängig von den weiteren Filterelementen 182 aus den Filterelementaufnahmen 184 entfernt und, beispielsweise zum Austausch von verunreinigten Filterelementen 182 durch frische Filterelemente 182, ersetzt werden können.

Das Filtermodul 122 umfasst vorzugsweise drei Filtervorrichtungen 118, welche bezüglich einer Strömungsrichtung im Filterbetrieb der Filteranlage 112 nacheinander oder hintereinander von dem Gasstrom durchströmt werden.

Entsprechend der Reihenfolge der Durchströmung sind eine Vorfiltervorrichtung 186, eine Hauptfiltervorrichtung 188 und eine Nachfiltervorrichtung 190 vorgesehen.

Die Vorfiltervorrichtung 186 ist beispielsweise ein Trägheitsfilter mit einer einfachen oder mehrfachen Strömungsumlenkung.

Die Vorfiltervorrichtung 186 umfasst hierzu vorzugsweise lediglich ein einziges Filterelement 182.

Eine Filterelementaufnahme 184 zur Aufnahme des Filterelements 182 der Vorfiltervorrichtung 186 kann beispielsweise ein Rahmen 192 oder Gestell 194 des Filtermoduls 122 sein.

Die Vorfiltervorrichtung 186 ist insbesondere direkt über der Hauptfiltervorrichtung 188 angeordnet.

Die Hauptfiltervorrichtung 188 umfasst mehrere, beispielsweise sechs, Filterelementaufnahmen 184 zur Aufnahme von mehreren, insbesondere sechs, Filterelementen 182.

Die Filterelemente 182 der Hauptfiltervorrichtung 188 sind vorzugsweise Trägheitsabscheider, beispielsweise Einweg-Filter.

Die Nachfiltervorrichtung 190 ist seitlich benachbart zu der Hauptfiltervorrichtung 188 angeordnet.

Die Nachfiltervorrichtung 190 umfasst insbesondere ein einziges Filterelement 182, welches beispielsweise als Mattenfilter ausgebildet ist.

Die Filterelemente 182 der Vorfiltervorrichtung 186, der Hauptfiltervorrichtung 188 und der Nachfiltervorrichtung 190 sind in im Wesentlichen horizontaler Richtung durchströmbar.

Eine Durchströmungsrichtung der Vorfiltervorrichtung 186 ist dabei der Durchströmungsrichtung der Hauptfiltervorrichtung 188 und der Nachfiltervorrichtung 190 entgegengesetzt.

Das Filtermodul 122 umfasst ferner mindestens ein Auffangelement 196, mittels welchem im Filterbetrieb des Filtermoduls 122 und/oder beim Austauschen von Filterelementen 182 herabfallende Verunreinigungen auffangbar sind.

Das Auffangelement 196 ist insbesondere als Wanne 198 ausgebildet.

Schließlich umfasst das Filtermodul 122 noch ein oder mehrere Handhabungselemente 200, beispielsweise Griffe 202, mittels welchen eine Person einfach an dem Filtermodul 122 angreifen kann, um dasselbe zu bewegen.

Wie insbesondere Fig. 3 zu entnehmen ist, ist das Filtermodul 122 abgesehen von der Möglichkeit der Bewegung mittels der Führungsvorrichtung 168 auch mittels einer separaten Transportvorrichtung 204 bewegbar.

Die Transportvorrichtung 204 kann beispielsweise eine Hubwagenvorrichtung 206 sein, mittels welcher das Filtermodul 122 anhebbar und abtransportierbar ist.

Alternativ hierzu kann bei einer (nicht dargestellten) Ausführungsform der Lackieranlage 100, insbesondere der Filteranlage 112, vorgesehen sein, dass ein oder mehrere Filtermodule 122 mittels eines Hängeförderers oder eines fahrerlosen Transportsystems bewegbar, insbesondere transportierbar, sind.

Mittels der Führungsvorrichtung 168 ist das Filtermodul 122 insbesondere von einer Filterstellung in eine Wechselstellung und/oder aus der Wechselstellung in die Filterstellung bringbar.

Mittels der Transportvorrichtung 204 ist das Filtermodul 122 an derjenigen Position, an welcher es sich in der Wechselstellung befindet, aufnehmbar und abtransportierbar. Ferner ist ein Filtermodul 122 mittels der Transportvorrichtung 204 zu der Filteranlage 112 hintransportierbar, insbesondere derart, dass ein hintransportiertes Filtermodul 122 in die Wechselstellung bringbar ist.

Wie Fig. 1 zu entnehmen ist, kann die Filteranlage 112 eine Wechselvorrichtung 208 zum automatischen Wechseln einzelner oder mehrerer Filterelemente 182 oder einzelner oder mehrerer Filtermodule 122 umfassen.

Die Wechselvorrichtung 208 ist insbesondere als eine Robotervorrichtung 210 ausgebildet und in und entgegen der Förderrichtung 110 längs der Filteranlage 112 beweglich.

Eine solche Wechselvorrichtung 208 kann einseitig oder beidseitig an der Filteranlage 112 vorgesehen sein (in Fig. 1 lediglich einseitig dargestellt).

Die vorstehend beschriebene Lackieranlage 100, insbesondere die vorstehend beschriebene Filteranlage 112, funktioniert wie folgt:
Im Betrieb der Lackieranlage 100 wird die durch die Lackierkabine 106 hindurchgeführte Luft mit Lack-Overspray verunreinigt und als verunreinigter Rohgasstrom der Filteranlage 112 zugeführt.

Der Rohgasstrom strömt dabei teilweise in den Rohgasschacht 142 und durch die Einlassöffnungen 134 in den Seitenwandungen 140 in die Filtermodulaufnahmen 120 hinein.

Ein weiterer Teil des Rohgasstroms, insbesondere ein in der Nähe der Außenwandungen 150 der Lackierkabine 106 und der Filteranlage 112 strömender Teil des Rohgasstroms, fließt vorzugsweise durch die Bypassöffnungen 136, das heißt beispielsweise durch die Einlassöffnungen 134 in den Deckenwandungen 138, der Filtermodulaufnahmen 120 in den Innenraum 126 der Filtermodulaufnahmen 120.

Da die Vorfiltervorrichtungen 186 der Filtermodule 122 direkt an die Einlassöffnungen 134 in den Seitenwandungen 140 der Filtermodulaufnahmen 120 angrenzen, wird der durch diese Einlassöffnungen 134 in den Seitenwandungen 140 einströmende Teil des Rohgasstroms durch die Vorfiltervorrichtungen 186 hindurchgeführt und somit bereits von einem Teil der darin enthaltenen Verunreinigungen befreit.

Nach dem Durchströmen der Vorfiltervorrichtungen 186 wird dieser Teil des Rohgasstroms mit dem durch die Bypassöffnungen 136 hindurchgeführten Rohgasstrom zusammengeführt und den Hauptfiltervorrichtungen 188 zugeführt.

Beim Durchströmen der Hauptfiltervorrichtungen 188 wird der Rohgasstrom weiter gereinigt und im Anschluss hieran zur noch gründlicheren Abscheidung von Verunreinigungen den Nachfiltervorrichtungen 190 zugeführt.

Nach dem Durchströmen sämtlicher Filtervorrichtungen 118 der Filtermodule 122 verlässt der so gereinigte Gasstrom als Reingasstrom die Filtermodulaufnahmen 120 durch die Auslassöffnungen 144 der Filtermodulaufnahmen 120.

Insbesondere gelangt der Reingasstrom dann in den Reingaskanal 160.

In dem Reingaskanal 160 wird der Reingasstrom in der Schwerkraftrichtung g nach unten geführt und dann in horizontaler Richtung den Zusatzfiltervorrichtungen 156 zugeführt.

Nach einer ergänzenden Reinigung des Reingasstroms mittels der Zusatzfiltervorrichtungen 156 gelangt der Reingasstrom in die Sammelkanäle 162 und wird mittels der Sammelkanäle 162 aus der Filteranlage 112 abgeführt.

Nach einer gewissen Betriebsdauer der Lackieranlage 100, insbesondere nach einer gewissen Betriebsdauer der Filteranlage 112, sind die Filterelemente 182 der Filtervorrichtungen 118 mit Verunreinigungen beladen, insbesondere mit Lack-Overspray verunreinigt.

Die Filterleistung der Filterelemente 182 wird hierdurch reduziert. Ferner wird hierdurch ein Strömungswiderstand der Filterelemente 182 erhöht.

Die Filteranlage 112 arbeitet dann nicht mehr mit maximaler Effizienz.

Somit muss in regelmäßigen Abständen ein Austausch der Filterelemente 182 durchgeführt werden, wobei stärker verunreinigte Filterelemente 182 insbesondere durch frische Filterelemente 182 ersetzt werden.

Hierzu werden zunächst die Einlassöffnung 134 in der Deckenwandung 138 und/oder die Auslassöffnung 144 in der Seitenwandung 140 mittels der Verschließvorrichtungen 128 geschlossen. Die Durchströmung der Filtermodulaufnahme 120 wird somit unterbrochen.

Nun kann die Zugangsöffnung 146, insbesondere die Türe 148, geöffnet werden, um das Filtermodul 122 aus der Filterstellung in die Wechselstellung zu bewegen.

In dieser Wechselstellung können einzelne oder mehrere Filterelemente 182 ausgewechselt und durch frische Filterelemente 182 ersetzt werden.

Alternativ hierzu kann vorgesehen sein, dass zunächst die Einlassöffnung 134 in der Deckenwandung 138 geschlossen, dann die Zugangsöffnung 146, insbesondere die Türe 148, geöffnet und danach die Auslassöffnung 144 in der Seitenwandung 140 geschlossen wird. Hierdurch können die Filtermodulaufnahme 120 und/oder das Filtermodul 122 mit Frischluft, insbesondere Umgebungsluft oder Hallenluft, gespült werden, bevor das Filtermodul 120 aus der Filterstellung in die Wechselstellung bewegt wird.

Die Auslassöffnung 144 kann ferner alternativ hierzu auch durchgängig geöffnet bleiben, insbesondere während des gesamten Wechselvorganges.

Im Anschluss an den Filterwechsel kann das Filtermodul 122 zurück in die Filterstellung bewegt werden und steht dann nach Öffnung der Verschließvorrichtungen 128 zum weiteren Filterbetrieb zur Verfügung.

Alternativ hierzu kann nach dem Herausbewegen des Filtermoduls 122 aus der Filterstellung in die Wechselstellung auch vorgesehen sein, dass das gesamte Filtermodul 122 von der Filteranlage 112 entfernt und durch ein frisches Filtermodul 122, das heißt ein Filtermodul 122 mit frischen Filterelementen 182, ausgetauscht wird.

Dies kann insbesondere mittels der Transportvorrichtung 204 und/oder mittels der Wechselvorrichtung 208 erfolgen.

Dadurch, dass die Filtermodulaufnahmen 120 im Wesentlichen voneinander unabhängige Strömungskanäle 130 der Filteranlage 112 bilden, können einzelne Filtermodule 122 oder Filterelemente 182 auch im laufenden Betrieb der Filteranlage 112 gewechselt werden, da bei einem Austausch, das heißt der zwischenzeitigen Abschaltung, einzelner Filtermodule 122 die übrigen Filtermodule 122 die Reinigungsfunktion der Filteranlage 112 weiterhin gewährleisten.

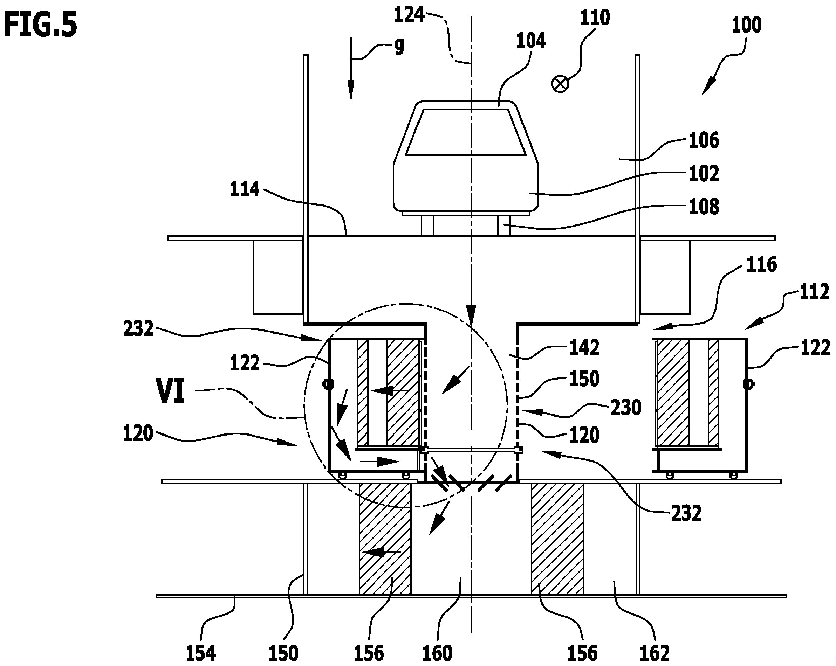

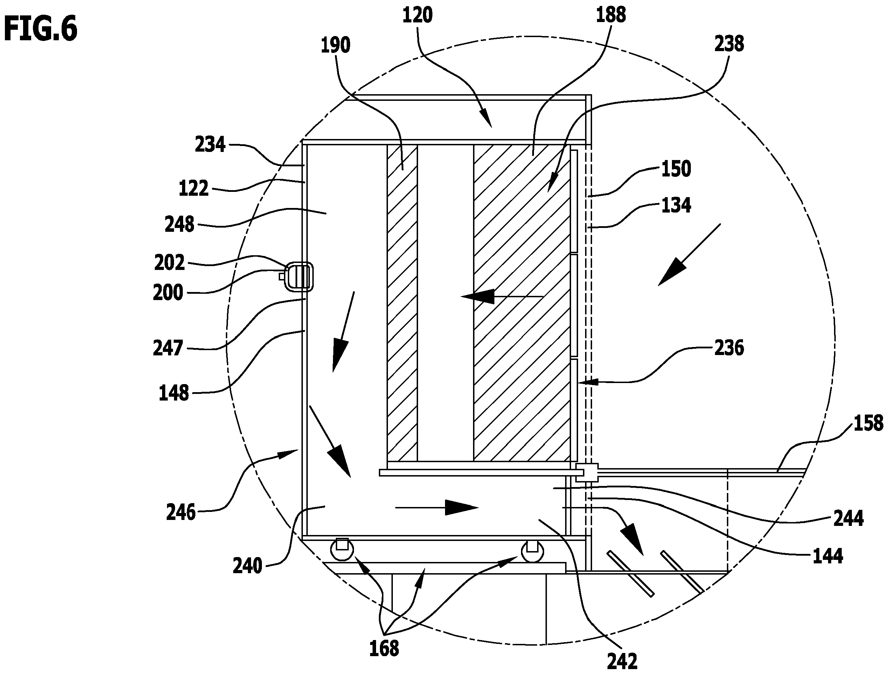

Eine in den Fig. 5 und 6 dargestellte Ausführungsform einer Lackieranlage 100, insbesondere einer Filteranlage 112, unterscheidet sich von der in den Fig. 1 bis 4 dargestellten ersten Ausführungsform im Wesentlichen dadurch, dass die Filtermodulaufnahmen 120 als Anlagebereiche 230 an den Außenwandungen 150 der Filteranlage 112, insbesondere der Grundkonstruktion 116 der Filteranlage 112, ausgebildet sind.

Die Außenwandungen 150 sind dabei mit Einbuchtungen 232 versehen, in welchen die Filtermodule 122 anordenbar sind.

Die Einbuchtungen 232 sind offen ausgebildet. Im Filterbetrieb der Filteranlage 112 sind die Filtermodule 122 somit von außerhalb der Filteranlage 112 zugänglich.

Die Seitenwand 140 der Filtermodulaufnahme 120, welche zugleich die Außenwandung 150 der Grundkonstruktion 116 ist, umfasst bei der in den Fig. 5 und 6 dargestellten Ausführungsform der Filteranlage 112 eine Einlassöffnung 134 und eine Auslassöffnung 144.

Die Einlassöffnung 134 und die Auslassöffnung 144 sind dabei bezüglich der Schwerkraftrichtung g übereinander angeordnet und mittels einer Trennwand 158 voneinander getrennt.

Die Einlassöffnung 134 ist dabei über der Auslassöffnung 144 angeordnet.

Die an die Anlagebereiche 230 anlegbaren Filtermodule 122 umfassen jeweils eine Hauptfiltervorrichtung 188 und jeweils eine Nachfiltervorrichtung 190.

Bei einer (nicht dargestellten) weiteren Ausführungsform kann zudem eine Vorfiltervorrichtung 186 vorgesehen sein.

Die Filtermodule 122 umfassen jeweils ein Gehäuse 234, welches insbesondere fünfseitig fluiddicht geschlossen oder schließbar ist.

Eine in der Filterstellung der Filtermodule 122 an der Seitenwandung 140 der Filtermodulaufnahme 120 anliegende Vorderseite 236 des Gehäuses 234 ist vorzugsweise geöffnet ausgebildet und an die Einlassöffnung 134 sowie an die Auslassöffnung 144 anlegbar.

Die Filtermodulaufnahme 120 und/oder das Filtermodul 122 umfasst zwei Flanschbereiche, welche die Einlassöffnung 134 und die Auslassöffnung 144 umgeben und die Filtermodulaufnahme 120 und das zugehörige Filtermodul 122 gegenüber einer Umgebung der Filteranlage 112 abdichten.

Jedes Filtermodul 122 umfasst einen Einströmabschnitt 238, welcher sich an die Einlassöffnung 134 anschließt, einen Umkehrabschnitt 240 zur Strömungsumkehrung, einen Rückführabschnitt 242 zur Rückführung des Gasstroms in Richtung der Vorderseite 236 des Filtermoduls 122 sowie einen Ausströmabschnitt 244, durch welchen der Gasstrom der Auslassöffnung 144 zuführbar ist.

Der Einströmabschnitt 238 ist entsprechend der Anordnung der Einlassöffnung 134 und der Auslassöffnung 144 über dem Ausströmabschnitt 244 angeordnet.

Der Rückführabschnitt 242 ist insbesondere unter der Hauptfiltervorrichtung 188 und der Nachfiltervorrichtung 190 angeordnet.

Der Umkehrabschnitt 240 ist insbesondere im Bereich einer der Vorderseite 236 des Filtermoduls 122 gegenüberliegend angeordneten Rückseite 246 des Filtermoduls 122 angeordnet.

Die Rückseite 246 des Filtermoduls 122 umfasst insbesondere eine Filterzugangsöffnung 247, beispielsweise eine Türe 148, durch welche ein Innenraum 248 des Filtermoduls 122 zugänglich ist. Hierdurch können die Filterelemente 182 der Nachfiltervorrichtung 190 und/oder der Hauptfiltervorrichtung 188 zum einfachen Austausch derselben zugänglich sein.

Wie insbesondere Fig. 6 zu entnehmen ist, ist die Führungsvorrichtung 168 außerhalb eines von einem Gasstrom durchströmten Bereichs der Filteranlage 112 angeordnet. Eine unerwünschte Verunreinigung der Führungsvorrichtung 168 im Filterbetrieb der Filteranlage 112 kann hierdurch reduziert oder ganz vermieden werden.

Im Übrigen stimmt die in den Fig. 5 und 6 dargestellte Ausführungsform der Lackieranlage 100, insbesondere der Filteranlage 112, hinsichtlich Aufbau und Funktion mit der in den Fig. 1 bis 4 dargestellten ersten Ausführungsform überein, so dass auf deren vorstehende Beschreibung insoweit Bezug genommen wird.

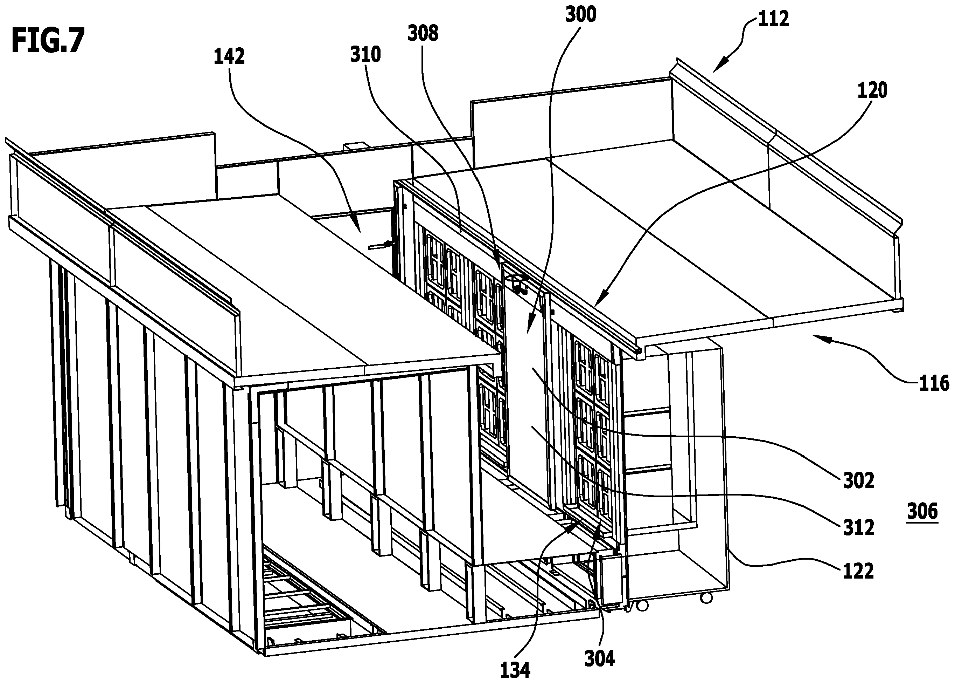

Eine in den Fig. 7 bis 9 dargestellte alternative Ausführungsform einer Filteranlage 112 unterscheidet sich von der in den Fig. 5 und 6 dargestellten Ausführungsform im Wesentlichen dadurch, dass die Filteranlage 112 eine Sperrvorrichtung 300 zum Sperren von Fluiddurchgängen 304 umfasst.

Die Sperrvorrichtung 300 ist dabei insbesondere eine von den Verschließvorrichtungen 128 oder von sonstigen Verschließvorrichtungen separate Vorrichtung.

Die Sperrvorrichtung 300 umfasst vorzugsweise ein Sperrelement 302, welches im Bereich der Einlassöffnungen 134 der Filtermodulaufnahmen 120 verschiebbar angeordnet ist.

Die Sperrvorrichtung 300 umfasst hierfür eine Bewegungsvorrichtung 308, welche beispielsweise eine Linearführung 310 zur translatorischen Bewegung des Sperrelements 302 aufweist.

Das Sperrelement 302 ist beispielsweise eine Abdeckplatte 312, welche beispielsweise zumindest näherungsweise die Dimension einer einzelnen Einlassöffnung 134 aufweist.

Das Sperrelement 302 ist vorzugsweise wahlweise vor einzelnen Einlassöffnungen 134 anordenbar.

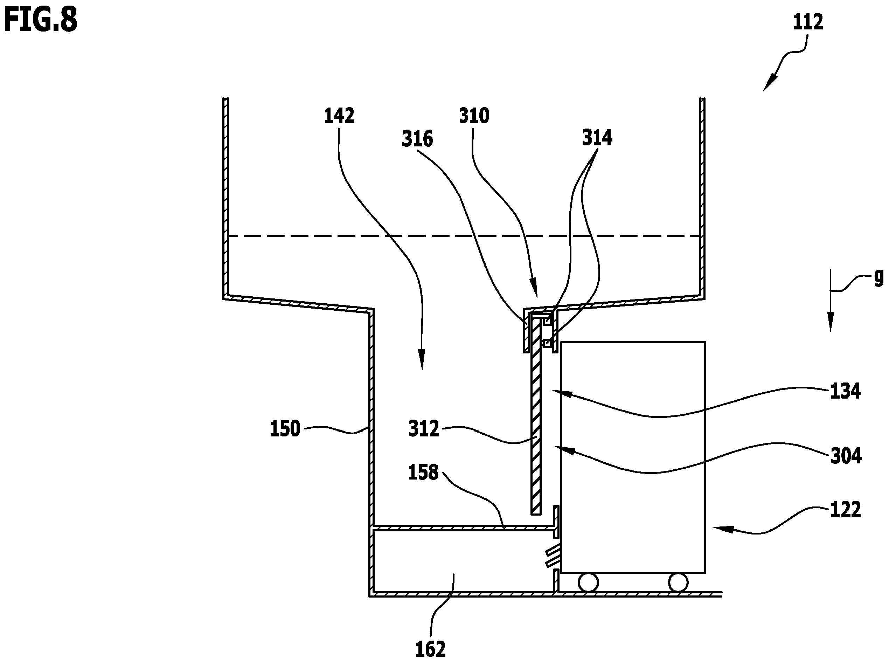

Wie Fig. 8 zu entnehmen ist, ist das Sperrelement 302 beispielsweise an mehreren Führungsschienen 314 der Linearführung 310 geführt, wobei beispielsweise eine Führungsschiene 314 zur Lastaufnahme und eine weitere Führungsschiene 314 zur Positionierung und/oder Drehausrichtung vorgesehen sein können.

Die Führungsschienen 314 der Linearführung 310 sind vorzugsweise innerhalb eines nach unten geöffneten U-Profils 316 angeordnet, wobei das Sperrelement 302 vorzugsweise in das U-Profil 316 hineinragt.

Die Linearführung 310 ist aufgrund des U-Profils 316 vorzugsweise vor Verunreinigungen geschützt.

An einem bezüglich der Schwerkraftrichtung g unteren Ende des Sperrelements 302 kann optional eine Führung, insbesondere eine Seitenführung, vorgesehen sein. Bei der in den Fig. 7 bis 9 dargestellten Ausführungsform ist das Sperrelement 302 lediglich an seinem bezüglich der Schwerkraftrichtung g oberen Ende geführt.

In einem Normalbetrieb der Filteranlage 112, in welchem zumindest temporär kein Filtermodul 122 ausgewechselt werden muss, wäre das Sperrelement 302 bei der in den Fig. 7 und 8 dargestellten Positionierung möglicherweise hinderlich. Insbesondere würde das Sperrelement 302 eine optimierte Filterwirkung sämtlicher Filtermodule 122 behindern, wenn das Sperrelement 302 permanent im Bereich vor den Einlassöffnungen 134 der Filtermodulaufnahmen 120 angeordnet wäre.

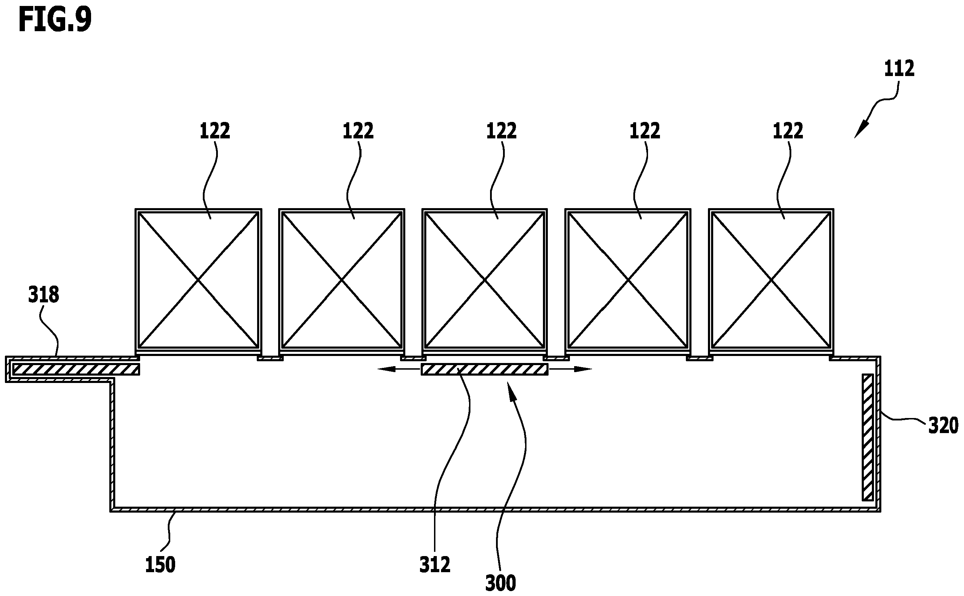

Wie Fig. 9 zu entnehmen ist, ist bei der Filteranlage 112 gemäß dieser Ausführungsform folglich mindestens eine Möglichkeit zur Aufbewahrung des Sperrelements 302 für die Zeiträume vorgesehen, in welchen es nicht zum Abdecken einer Einlassöffnung 134 benötigt wird.

Das Sperrelement 302 ist hierfür beispielsweise in eine Nische 318 einbringbar, beispielsweise einfahrbar.

Eine solche Nische 318 kann beispielsweise in einer Verlängerung einer Wandung der Filteranlage 112 angeordnet sein, in welcher die Einlassöffnungen 134 der Filtermodulaufnahme 120 angeordnet sind.

Die Bewegungsvorrichtung 308, insbesondere die Linearführung 310, kann hierdurch besonders einfach ausgebildet sein, indem sich diese über den Bereich der Wandung mit den Einlassöffnungen 134 hinaus erstreckt, beispielsweise so weit, dass das Sperrelement 302 mindestens um seine eigene Breite versetzt von den Einlassöffnungen 134 angeordnet werden kann.

Alternativ oder ergänzend zu einer Aufbewahrungsposition in einer Nische 318 kann vorgesehen sein, dass das Sperrelement 302 von der mit Einlassöffnungen 134 versehenen Wandung hin zu einer nicht mit Einlassöffnungen 134 versehenen Seitenwandung 320 bewegbar ist, beispielsweise mittels eines Klapp- und/oder Rotationsmechanismus und/oder durch geeignete Krümmung einer oder mehrerer Führungsschienen 314.

Die Seitenwandung 320, an welcher das Sperrelement 302 optional anlegbar ist, ist beispielsweise eine Stirnseite eines Rohgasschachts 142.

Das Sperrelement 302 ist vorzugsweise automatisch mit dieser Bewegungsvorrichtung 308 aus einer Aufbewahrungsposition herausbewegbar, um nach Bedarf eine der Einlassöffnungen 134 der Filtermodulaufnahme 120 abzudecken und somit einen Filtermodulwechsel zu ermöglichen und/oder zu vereinfachen.

Im Übrigen stimmt die in den Fig. 7 bis 9 dargestellte alternative Ausführungsform einer Filteranlage 112 hinsichtlich Aufbau und Funktion mit der in den Fig. 5 und 6 dargestellten Ausführungsform überein, so dass auf deren vorstehende Beschreibung insoweit Bezug genommen wird.

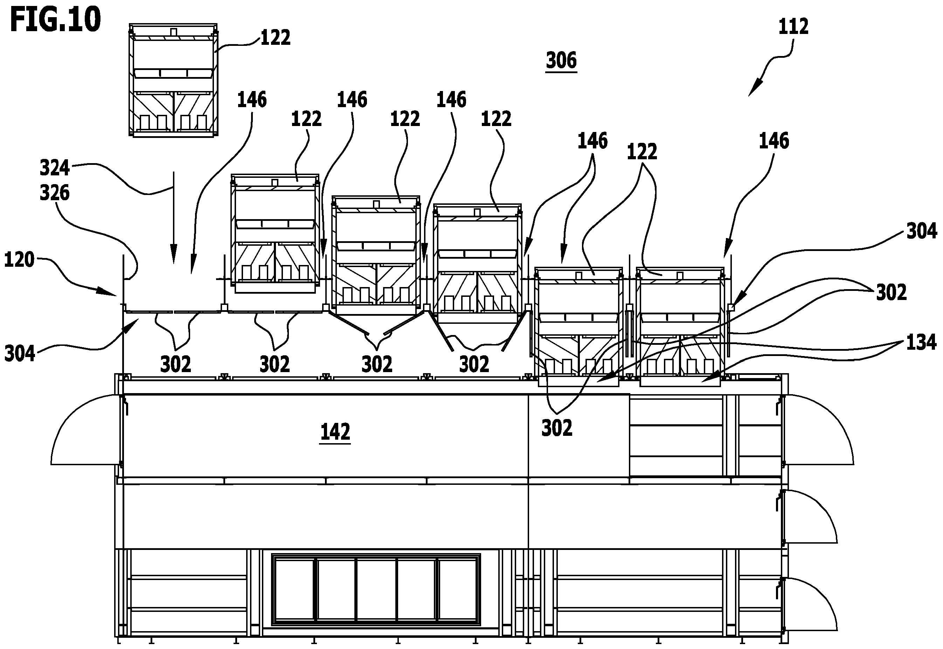

Eine in den Fig. 10 bis 12 dargestellte weitere alternative Ausführungsform einer Filteranlage 112 unterscheidet sich von der in den Fig. 7 bis 9 dargestellten Ausführungsform im Wesentlichen dadurch, dass nicht ein Sperrelement 302 der Sperrvorrichtung 300 zum Verschließen mehrerer Fluiddurchgänge 304 vorgesehen ist, sondern dass vielmehr jedem Fluiddurchgang 304 jeweils ein oder mehrere, beispielsweise zwei, Sperrelemente 302 zugeordnet sind.

Die Bewegungsvorrichtung 308 umfasst bei der in den Fig. 10 bis 12 dargestellten Ausführungsform mehrere Rotationsführungen 322, wobei insbesondere jedem Sperrelement 302 jeweils eine separate Rotationsführung 322 zugeordnet ist.

Jedes Sperrelement 302 ist somit vorzugsweise mittels jeweils einer Rotationsführung 322 drehbar.

In Fig. 10 sind mehrere Sperrelemente 302 in verschiedenen Stellungen gezeigt.

Die in Fig. 10 links dargestellte Filtermodulaufnahme 120 weist kein Filtermodul 122 auf. Die beiden Sperrelemente 302 sind daher in der Sperrstellung angeordnet und verschließen den Fluiddurchgang 304.

Der Fluiddurchgang 304 ist dabei zwischen der Einlassöffnung 134 und der Zugangsöffnung 146 der Filtermodulaufnahme 120 angeordnet.

Diese Anordnung ermöglicht insbesondere einerseits die Betätigung der Sperrelemente 302 mittels der Filtermodule 122, wobei die Sperrelemente 302 insbesondere aus der Sperrstellung in die Freigabestellung aufgeschwenkt werden, wenn ein Filtermodul 122 in die Filtermodulaufnahme 120 eingeschoben wird.

Ferner ermöglicht die genannte Positionierung der Sperrelemente 302 eine bezüglich einer Einschubrichtung 324 zwischen der Zugangsöffnung 146 und dem Fluiddurchgang 304 wirkende Abdichtung zwischen dem Filtermodul 122 und der Filtermodulaufnahme 120. Die Filtermodulaufnahme 120 umfasst hierfür eine Dichtungsvorrichtung 326, welche beispielsweise als Bürstendichtung oder Lippendichtung ausgebildet ist und an zwei, drei oder vier Außenseiten eines Gehäuses des Filtermoduls 122 abdichtend anliegen kann.

Durch diese Abdichtung mittels der Dichtungsvorrichtung 326 kann beim Öffnen der Sperrelemente 302, das heißt beim Bewegen derselben aus der Sperrstellung in die Freigabestellung, ein unerwünschter Austritt von Verunreinigungen in die Umgebung 306 verhindert oder zumindest minimiert werden. Insbesondere kann hierdurch die Öffnung des Fluiddurchgangs 304 durch das Öffnen der Sperrelemente 302 beeinträchtigungsfrei erfolgen.

Wie insbesondere den beiden mittleren Filtermodulaufnahmen 120 in Fig. 10 zu entnehmen ist, werden die Sperrelemente 302 mittels der Filtermodule 122 aufgeschwenkt und gelangen schließlich gemäß der Darstellung der beiden rechten Filtermodulaufnahmen 120 in Fig. 10 in einen Zwischenbereich 328, welcher insbesondere zwischen zwei Filtermodulaufnahmen 120 und/oder zwischen der Zugangsöffnung 146 und der Einlassöffnung 134 angeordnet ist.

Insbesondere können dabei Sperrelemente 302 von benachbart zueinander angeordneten Filtermodulaufnahmen 120 aneinander angelegt und/oder parallel zueinander ausgerichtet werden.

Die Sperrelemente 302 können insbesondere derart positioniert und/oder bewegt werden, dass diese neben ihrer Sperrwirkung als Bestandteil der Sperrvorrichtung 300 zusätzlich als Führungsvorrichtung zur Führung und/oder Positionierung der Filtermodule 122 dienen.

Die Sperrelemente 302 können somit selbst Bestandteil einer noch zu beschreibenden Zwischenwand zwischen zwei Filtermodulaufnahmen 120 sein.

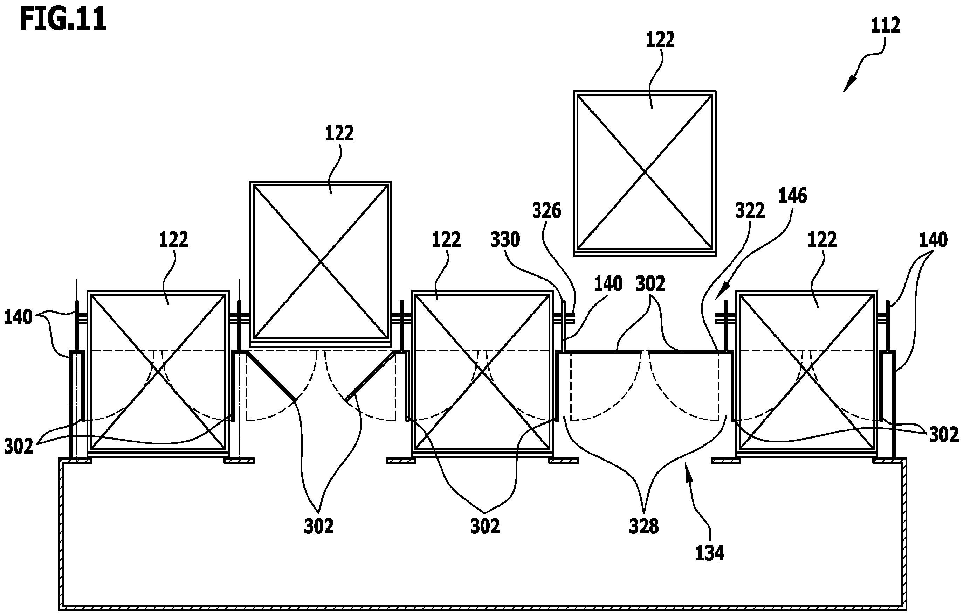

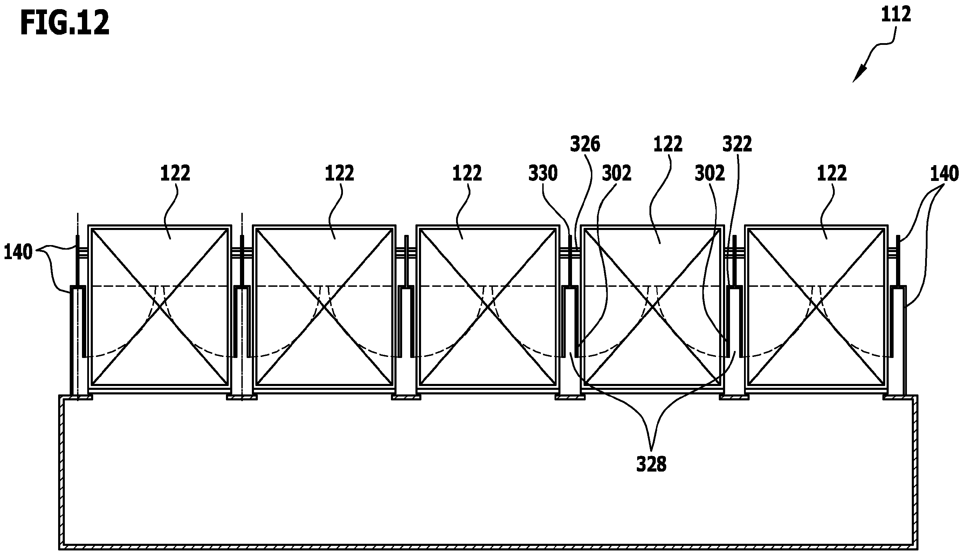

Wie insbesondere aus den Fig. 11 und 12 hervorgeht, kann beispielsweise zur Aufnahme der Dichtungsvorrichtung 326 und/oder der Rotationsführung 322 und/oder der Sperrelemente 302 einer jeden Filtermodulaufnahme 120 eine die jeweilige Filtermodulaufnahme 120 umgebende oder begrenzende Seitenwand 140 vorgesehen sein.

Zwischen zwei Filtermodulaufnahmen 120 kann diese Seitenwand 140 optional durchgängig, das heißt sich von der Zugangsöffnung 146 bis hin zur Einlassöffnung 134 erstreckend, ausgebildet sein.

Bei der in den Fig. 10 bis 12 dargestellten Ausführungsform ist hingegen vorgesehen, dass diese jeweils zwei Filtermodulaufnahmen 120 voneinander trennende Seitenwand 140 verkürzt ausgebildet ist und sich beispielsweise lediglich von der Zugangsöffnung 146 bis zu den Rotationsführungen 322 zur schwenkbaren Aufnahme der Sperrelemente 302 erstreckt.

Diese Seitenwandung 140 wird nachfolgend als Zwischenwand 330 bezeichnet.

Bei der in den Fig. 10 bis 12 dargestellten verkürzten Ausgestaltung der Zwischenwände 330 ergibt sich eine Fluidverbindung zwischen den Filtermodulaufnahmen 120 auf den dem Rohgasschacht 142 zugewandten Seiten der Fluiddurchgänge 304. Hierdurch kann insbesondere eine Druckschwankung zwischen den Filtermodulaufnahmen 120, welche beispielsweise bei einem Einschieben oder Herausziehen eines Filtermoduls 122 erzeugt wird, einfacher ausgeglichen werden. Ferner kann durch eine gemeinsame Absaugung des Bereichs zwischen den Einlassöffnungen 134 und den Fluiddurchgängen 304 mit geringem Aufwand eine Zusatzsicherheit zur Vermeidung von Verunreinigungen in der Umgebung 306 erzielt werden.

Im Übrigen stimmt die in den Fig. 10 bis 12 dargestellte alternative Ausführungsform der Filteranlage 112 hinsichtlich Aufbau und Funktion mit der in den Fig. 7 bis 9 dargestellten Ausführungsform überein, so dass auf deren vorstehende Beschreibung insoweit Bezug genommen wird.

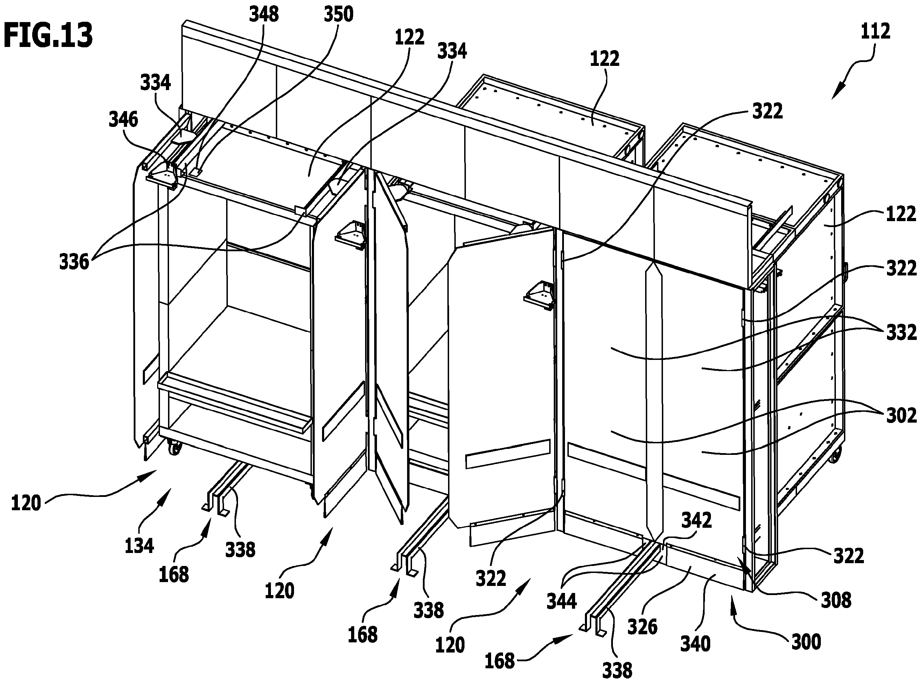

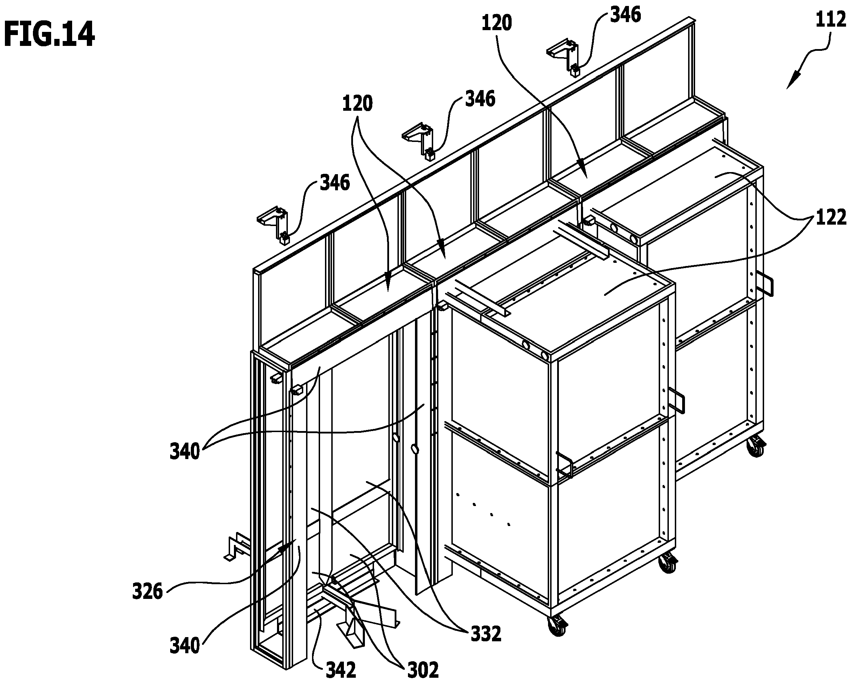

Eine in den Fig. 13 bis 15 dargestellte, weitere Alternative Ausführungsform einer Filteranlage 112 unterscheidet sich von der in den Fig. 10 bis 12 dargestellten Ausführungsform im Wesentlichen dadurch, dass die Abdichtung zwischen den Filtermodulaufnahmen 120 und den Filtermodulen 122 und die Führungsvorrichtung 168 zur Zuführung der Filtermodule 122 zu den Filtermodulaufnahmen 120 optimiert sind.

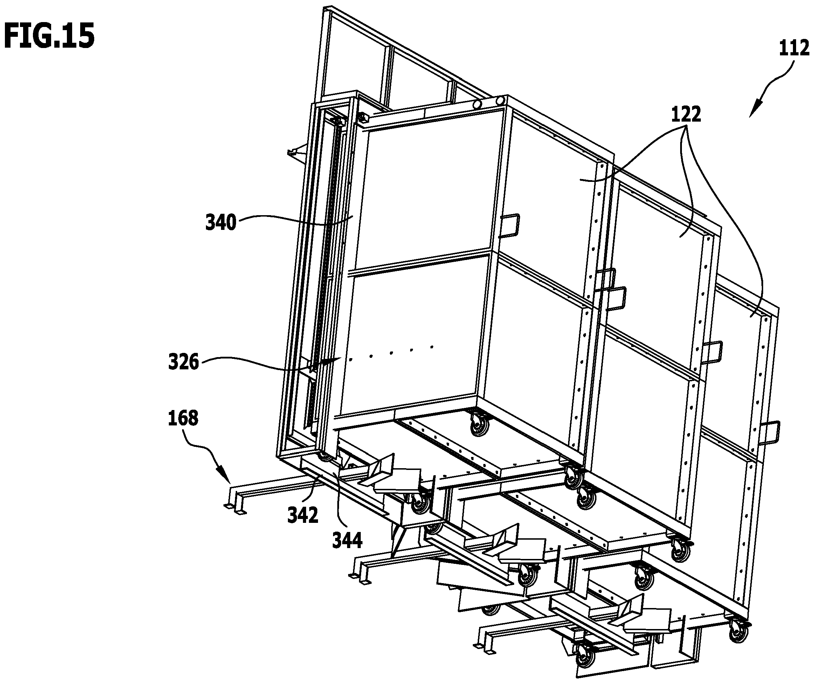

Wie insbesondere den Fig. 15 und 16 zu entnehmen ist, umfasst die Filteranlage 112 auch hier für jede Filtermodulaufnahme 120 zwei Sperrelemente 302, welche beispielsweise als Klappenelemente 332 ausgebildet sind und an einander gegenüberliegenden Seiten einer jeden Filtermodulaufnahme 120 mittels Rotationsführungen 322 drehbar gehalten sind, insbesondere um eine im Wesentlichen vertikale Achse. Die Sperrelemente 302 sind insbesondere Pendeltüren, welche vorzugsweise paarweise für jede Filtermodulaufnahme 120 vorgesehen sind.

Die Sperrelemente 302 sind beispielsweise mit jeweils einem Betätigungshebel 334 oder einem sonstigen Betätigungselement versehen, an welchem ein Filtermodul 122 beim Einschieben desselben angreift, um die Sperrelemente in eine Offenstellung zu bringen. Die Filtermodule 122 weisen hierfür vorzugsweise jeweils zwei Schienenelemente 336 auf, wobei jedem Betätigungshebel 334 jeweils ein Schienenelement 336 zugeordnet ist. Die Betätigungshebel 334 sind insbesondere durch die Schienenelemente 336 auslenkbar oder betätigbar und/oder an den Schienenelementen 336 entlangführbar. Mittels der Betätigungshebel 334 und der Schienenelemente 336 sind die Sperrelemente 302 vorzugsweise beabstandet von dem jeweiligen Filtermodul 122 in einer Offenstellung gehalten oder haltbar.

Günstig kann es sein, wenn eine oder mehrere oder sämtliche Filtermodulaufnahmen 120 mit jeweils einem oder mehreren Führungselementen 338 einer Führungsvorrichtung 168 versehen sind. Die Führungselemente 338 sind insbesondere Leitbleche, Leitplanken oder Schienen zur Positionierung und/oder Führung der Filtermodule 122, um eine korrekte Zuführung und eine optimierte Abdichtung an den Filtermodulaufnahmen 120 zu erhalten.

Zur weiterhin optimierten Abdichtung kann vorgesehen sein, dass die Dichtungsvorrichtung 326 eine oder mehrere Bürstendichtungen oder Lippendichtungen, insbesondere Bürstenelemente 340 oder Lippenelemente 342, beispielsweise Gummilippen, umfasst.

An Seitenwandungen oder Seitenbereichen der Filtermodulaufnahmen 120 und/oder an Deckenwandungen oder Deckenbereichen der Filtermodulaufnahmen 120 und/oder an Bodenwandungen oder Bodenbereichen der Filtermodulaufnahmen 120 sind vorzugsweise eine oder mehrere Bürstendichtungen, insbesondere Bürstenelemente 340, angeordnet.

An Bodenwandungen oder Bodenbereichen der Filtermodulaufnahmen 120 sind vorzugsweise zusätzlich zu einer oder mehreren Bürstendichtungen eine oder mehrere Lippendichtungen, insbesondere Lippenelemente 342, beispielsweise Gummilippen, angeordnet. Beispielsweise kann eine Lippendichtung zusammen mit einer Bürstendichtung derart in oder an den Filtermodulaufnahmen 120 angeordnet sein, dass hiermit ein zwischen Transportrollen des jeweils einzuführenden Filtermoduls 122 befindlicher Bereich abdichtbar ist (siehe insbesondere Fig. 15). Eine solche Lippendichtung ist insbesondere eine Zusatzdichtung 344, welche zusätzlich zu Bürstendichtungen vorgesehen ist.

Vorteilhaft kann es sein, wenn eine oder mehrere Bürstendichtungen, insbesondere Bürstenelemente 340, in einem Bodenbereich oder Bodenabschnitt der Sperrelemente 302 angeordnet oder ausgebildet sind. Mittels derartiger Bürstendichtungen ist insbesondere ein Spaltbereich zwischen den Sperrelementen 340 und dem Boden der Filteranlage 112 im Sperrzustand (geschlossenen Zustand) der Sperrelemente 302 abdichtbar.

Zur Überwachung und/oder zur Anwesenheits- und/oder Funktionskontrolle der Filteranlage 112 sind vorzugsweise ein oder mehrere Sensorelemente 346 an einer oder mehreren, insbesondere sämtlichen, Filtermodulaufnahmen 120 angeordnet. Die Detektion und/oder Überwachung oder Kontrolle eines in der jeweiligen Filtermodulaufnahme 120 angeordneten Filtermoduls 122 kann beispielsweise mit einem Gegenstück 348, welches mit dem Sensorelement 346 zusammenwirkt, optimiert werden. Das Gegenstück 348 kann ein passives oder aktives Element sein. Beispielsweise kann das Gegenstück 348 ein Positionsmarker sein. Ferner kann vorgesehen sein, dass das Gegenstück 348 ein Informationsträger 350 ist oder einen solchen umfasst. Ein Informationsträger 350 ist beispielsweise ein RFID-Element oder ein Barcode.

Die Sensorelemente 346 können insbesondere im Bereich der Einlassöffnung 134 angeordnet sein. Ferner kann eine Anordnung der Sensorelemente 346 außerhalb eines mittels der Sperrelemente 302 von dem Rohgasschacht 142 abgetrennten Bereichs vorgesehen sein, beispielsweise an einer Außenseite einer Wandung, an welcher oder in welcher die Sperrelemente 302 angeordnet oder integriert sind. Ein oder mehrere Gegenstücke 348 sind dann vorzugsweise komplementär zur Positionierung der Sensorelemente 346 derart an den Filtermodulen 122 angeordnet, dass die Gegenstücke 348 und die Sensorelemente 346 im vollständig eingeschobenen Zustand der Filtermodule 122 in den Filtermodulaufnahmen 120 miteinander wechselwirken können oder zumindest die Sensorelemente 346 das jeweilige Gegenstück 348 erfassen können.

Im geschlossenen Zustand (Sperrzustand) der Sperrelemente 302 verlaufen diese vorzugsweise in einer gemeinsamen, im Wesentlichen vertikalen Ebene, welche insbesondere zwischen der Einlassöffnung 134 und der Zugangsöffnung 146 einer jeden Filtermodulaufnahme 120 verläuft (vergleiche insbesondere Fig. 10). Diese Ebene bildet insbesondere eine parallel zu dem Rohgasschacht 142 verlaufende, nach außen versetzte Wandung.

### Bezugszeichenliste

- 100: Lackieranlage
- 102: Werkstück
- 104: Fahrzeugkarosserie
- 106: Lackierkabine
- 108: Fördervorrichtung
- 110: Förderrichtung
- 112: Filteranlage
- 116: Grundkonstruktion
- 118: Filtervorrichtung
- 120: Filtermodulaufnahme
- 122: Filtermodul
- 124: Längsmittelebene
- 126: Innenraum
- 128: Verschließvorrichtung
- 130: Strömungskanal
- 132: Klappe
- 134: Einlassöffnung
- 136: Bypassöffnung
- 138: Deckenwandung
- 140: Seitenwandung
- 142: Rohgasschacht
- 144: Auslassöffnung
- 146: Zugangsöffnung
- 148: Türe
- 150: Außenwandung
- 152: Ebene
- 154: Boden
- 156: Zusatzfiltervorrichtung
- 158: Trennwand
- 160: Reingaskanal
- 162: Sammelkanal
- 164: Strömungsleitblech
- 166: Jalousieklappe
- 168: Führungsvorrichtung
- 170: Abdichtbereich
- 172: Teleskopschienenführung
- 174: Einlassbereich
- 176: Rahmenelement
- 178: Rollenvorrichtung
- 180: Transportwagen
- 182: Filterelement
- 184: Filterelementaufnahme
- 186: Vorfiltervorrichtung
- 188: Hauptfiltervorrichtung
- 190: Nachfiltervorrichtung
- 192: Rahmen
- 194: Gestell
- 196: Auffangelement
- 198: Wanne
- 200: Handhabungselement
- 202: Griff
- 204: Transportvorrichtung
- 206: Hubwagenvorrichtung
- 208: Wechselvorrichtung
- 210: Robotervorrichtung
- 212: Kabinenboden

- 230: Anlagebereich
- 232: Einbuchtung
- 234: Gehäuse
- 236: Vorderseite
- 238: Einströmabschnitt
- 240: Umkehrabschnitt
- 242: Rückführabschnitt
- 244: Ausströmabschnitt
- 246: Rückseite
- 247: Filterzugangsöffnung
- 248: Innenraum

- 300: Sperrvorrichtung
- 302: Sperrelement
- 304: Fluiddurchgang
- 306: Umgebung
- 308: Bewegungsvorrichtung
- 310: Linearführung
- 312: Abdeckplatte
- 314: Führungsschiene
- 316: U-Profil
- 318: Nische
- 320: Seitenwandung
- 322: Rotationsführung
- 324: Einschubrichtung
- 326: Dichtungsvorrichtung
- 328: Zwischenbereich
- 330: Zwischenwand
- 332: Klappenelement
- 334: Betätigungshebel
- 336: Schienenelement
- 338: Führungselement
- 340: Bürstenelement
- 342: Lippenelement
- 344: Zusatzdichtung
- 346: Sensorelement
- 348: Gegenstück
- 350: Informationsträger

- g: Schwerkraftrichtung

## Patentansprüche

1. Filteranlage (112) zum Abscheiden von Verunreinigungen aus einem Verunreinigungen enthaltenden Rohgasstrom, umfassend
eine Grundkonstruktion (116), durch welche der Rohgasstrom hindurchführbar ist und welche mindestens eine Filtermodulaufnahme (120) zur Aufnahme mindestens eines Filtermoduls (122) umfasst, und
mindestens ein Filtermodul (122), welches wahlweise an und/oder in der mindestens einen Filtermodulaufnahme (120) anordenbar oder von und/oder aus derselben entfernbar ist,
**dadurch gekennzeichnet, dass**
die Filteranlage (112) eine Sperrvorrichtung (300) umfasst, mittels welcher ein Fluiddurchgang (304) zwischen einem den Rohgasstrom führenden Teil der Grundkonstruktion (116) und einer Umgebung (306) der Filteranlage (112) wahlweise sperrbar oder freigebbar ist,
wobei der Fluiddurchgang (304) innerhalb der Filtermodulaufnahme (120) angeordnet ist, beabstandet von einer Einlassöffnung (134) der Filtermodulaufnahme (120), durch welche der Rohgasstrom von der Grundkonstruktion (116) in die Filtermodulaufnahme (120) und/oder von der Grundkonstruktion (116) in das in der Filtermodulaufnahme (120) angeordnete Filtermodul (122) strömt oder führbar ist, und
wobei die Sperrvorrichtung (300) ein oder mehrere Sperrelemente (302), als Schwenktüren oder Schwenktore, umfasst, welche wahlweise in den Fluiddurchgang (304) einbringbar oder aus demselben entfernbar sind und welche durch und/oder aufgrund einer Bewegung des mindestens einen Filtermoduls (122) selbst bewegbar sind.

2. Filteranlage (112) nach Anspruch 1, **dadurch gekennzeichnet, dass** die Sperrvorrichtung (300) ein oder mehrere Sperrelemente (302) umfasst, mittels welcher der Fluiddurchgang (304) wahlweise abdeckbar oder freigebbar ist.

3. Filteranlage (112) nach einem der Ansprüche 1 oder 2, **dadurch gekennzeichnet, dass** die Sperrvorrichtung (300) eine Bewegungsvorrichtung (308) umfasst,
a) mittels welcher das eine oder die mehreren Sperrelemente (302) aus einer Sperrstellung zum Sperren des Fluiddurchgangs (304) in eine Freigabestellung zum Freigeben des Fluiddurchgangs (304) bringbar sind; und/oder
b) mittels welcher das eine oder die mehreren Sperrelemente (302) aus einer Freigabestellung zum Freigeben des Fluiddurchgangs (304) in eine Sperrstellung zum Sperren des Fluiddurchgangs (304) bringbar sind.

4. Filteranlage (112) nach Anspruch 3, **dadurch gekennzeichnet, dass** die Bewegungsvorrichtung (308)
a) eine Linearführung (310) umfasst, mittels welcher ein oder mehrere Sperrelemente (302) zur Durchführung einer Translationsbewegung führbar sind; und/oder
b) eine Rotationsführung (322) umfasst, mittels welcher ein oder mehrere Sperrelemente (302) zur Durchführung einer Rotationsbewegung führbar sind.

5. Filteranlage (112) nach einem der Ansprüche 1 bis 4, **dadurch gekennzeichnet, dass** mindestens ein Sperrelement (302) der Sperrvorrichtung (300) mehreren Fluiddurchgängen (304) zugeordnet ist, um wahlweise unterschiedliche Fluiddurchgänge (304) mittels desselben mindestens einen Sperrelements (302) zu sperren oder freizugeben.

6. Filteranlage (112) nach einem der Ansprüche 1 bis 5, **dadurch gekennzeichnet, dass** ein oder mehrere Sperrelemente (302) oder sämtliche Sperrelemente (302) der Sperrvorrichtung (300) in eine oder mehrere Aufbewahrungspositionen bringbar sind, wobei die eine oder die mehreren Sperrelemente (302) oder sämtliche Sperrelemente (302) in der jeweiligen Aufbewahrungsposition von dem einen oder den mehreren Fluiddurchgängen (304) oder von sämtlichen Fluiddurchgängen (304) beabstandet angeordnet sind.

7. Filteranlage (112) nach einem der Ansprüche 1 bis 6, **dadurch gekennzeichnet, dass** ein oder mehrere Sperrelemente (302) in einer Freigabestellung derselben
a) an eine zwischen zwei Filtermodulaufnahmen (120) und/oder zwischen zwei Filtermodulen (122) angeordnete Zwischenwand (330) der Filteranlage (112) anlegbar sind; und/oder
b) in einen zwischen zwei Filtermodulaufnahmen (120) und/oder zwischen zwei Filtermodulen (122) angeordneten Zwischenbereich (328) der Filteranlage (112) bringbar oder angeordnet sind.

8. Filteranlage (112) nach einem der Ansprüche 1 bis 7, **dadurch gekennzeichnet, dass** der Fluiddurchgang (304) innerhalb der Filtermodulaufnahme (120) angeordnet ist,
beabstandet von einer Zugangsöffnung (146) der Filtermodulaufnahme (120), durch welche das Filtermodul (122) in die Filtermodulaufnahme (120) einbringbar oder aus derselben entfernbar ist.

9. Filteranlage (112) nach einem der Ansprüche 1 bis 8, **dadurch gekennzeichnet, dass** der Fluiddurchgang (304) angeordnet ist zwischen
a) einer Einlassöffnung (134) der Filtermodulaufnahme (120), durch welche der Rohgasstrom von der Grundkonstruktion (116) in die Filtermodulaufnahme (120) und/oder von der Grundkonstruktion (116) in das in der Filtermodulaufnahme (120) angeordnete Filtermodul (122) strömt oder führbar ist, und
b) einer Zugangsöffnung (146) der Filtermodulaufnahme (120), durch welche das Filtermodul (122) in die Filtermodulaufnahme (120) einbringbar oder aus derselben entfernbar ist.

10. Filteranlage (112) nach einem der Ansprüche 1 bis 7, **dadurch gekennzeichnet, dass** der Fluiddurchgang (304) eine Einlassöffnung (134) einer Filtermodulaufnahme (120) ist, durch welche der Rohgasstrom von der Grundkonstruktion (116) in die Filtermodulaufnahme (120) und/oder von der Grundkonstruktion (116) in das in der Filtermodulaufnahme (120) angeordnete Filtermodul (122) strömt oder führbar ist.

11. Filteranlage (112) nach einem der Ansprüche 1 bis 10, **dadurch gekennzeichnet, dass** zwischen dem Fluiddurchgang (304) und einer Zugangsöffnung (146) der Filtermodulaufnahme (120), durch welche das Filtermodul (122) in die Filtermodulaufnahme (120) einbringbar oder aus derselben entfernbar ist, eine Dichtungsvorrichtung (326) angeordnet ist, beispielsweise eine Bürstendichtung und/oder eine Lippendichtung.

12. Lackieranlage (100) zum Lackieren von Werkstücken (102), insbesondere Fahrzeugkarosserien (104), umfassend mindestens eine Filteranlage (112) nach einem der Ansprüche 1 bis 11.

13. Verfahren zum Abscheiden von Verunreinigungen aus einem Verunreinigungen enthaltenden Rohgasstrom mittels einer Filteranlage (112), insbesondere einer Filteranlage nach einem der Ansprüche 1 bis 11, wobei das Verfahren Folgendes umfasst:
- Zuführen des Rohgasstroms von einem den Rohgasstrom führenden Teil einer Grundkonstruktion (116) der Filteranlage (112) zu einem Filtermodul (122) der Filteranlage (112), wobei das Filtermodul (122) an und/oder in einer Filtermodulaufnahme (120) der Filteranlage (112) angeordnet ist;
- Abscheiden von Verunreinigungen aus dem Rohgasstrom an einem oder mehreren Filterelementen (182) des Filtermoduls (122);
- Sperren eines Fluiddurchgangs (304) zwischen dem den Rohgasstrom führenden Teil der Grundkonstruktion (116) und einer Umgebung (306) der Filteranlage (112) mittels einer Sperrvorrichtung (300);
- Entfernen des Filtermoduls (122) von und/oder aus der Filtermodulaufnahme (120),
wobei der Fluiddurchgang (304) innerhalb der Filtermodulaufnahme (120) angeordnet ist, beabstandet von einer Einlassöffnung (134) der Filtermodulaufnahme (120), durch welche der Rohgasstrom von der Grundkonstruktion (116) in die Filtermodulaufnahme (120) und/oder von der Grundkonstruktion (116) in das in der Filtermodulaufnahme (120) angeordnete Filtermodul (122) strömt oder führbar ist, und
wobei die Sperrvorrichtung (300) ein oder mehrere Sperrelemente (302), als Schwenktüren oder Schwenktore, umfasst, welche wahlweise in den Fluiddurchgang (304) einbringbar oder aus demselben entfernbar sind und welche durch und/oder aufgrund einer Bewegung des Filtermoduls (122) selbst bewegbar sind.

14. Verfahren nach Anspruch 13, **dadurch gekennzeichnet, dass** der Fluiddurchgang (304) gesperrt wird, bevor das Filtermodul (122) von und/oder aus der Filtermodulaufnahme (120) entfernt wird oder während das Filtermodul (122) von und/oder aus der Filtermodulaufnahme (120) entfernt wird.

## Claims

1. Filter system (112) for separating contaminants from a crude gas stream containing contaminants, comprising
a basic structure (116) through which the crude gas stream is able to be guided and which comprises at least one filter module receptacle (120) for receiving at least one filter module (122), and
at least one filter module (122) which is selectively able to be arranged on and/or in the at least one filter module receptacle (120) or removed from and/or out of same,
**characterized in that**
the filter system (112) comprises a blocking apparatus (300) which can be used to selectively block or release a fluid passage (304) between a part of the basic structure (116), said part guiding the crude gas stream, and an environment (306) of the filter system (112),
wherein the fluid passage (304) is arranged within the filter module receptacle (120), spaced apart from an inlet opening (134) of the filter module receptacle (120), through which inlet opening the crude gas stream flows or is able to be guided from the basic structure (116) into the filter module receptacle (120) and/or from the basic structure (116) into the filter module (122) arranged in the filter module receptacle (120), and
wherein the blocking apparatus (300) comprises one or more blocking elements (302), in the form of pivoting doors or pivoting gates, which are selectively able to be introduced into the fluid passage (304) or removed from same and are movable by and/or owing to a movement of the at least one filter module (122) itself.

2. Filter system (112) according to Claim 1, **characterized in that** the blocking apparatus (300) comprises one or more blocking elements (302) which can be used to selectively cover or release the fluid passage (304).

3. Filter system (112) according to either of Claims 1 and 2, **characterized in that** the blocking apparatus (300) comprises a movement apparatus (308)
a) which can be used to bring the one or the multiple blocking elements (302) from a blocking position for blocking the fluid passage (304) to a releasing position for releasing the fluid passage (304); and/or
b) which can be used to bring the one or the multiple blocking elements (302) from a releasing position for releasing the fluid passage (304) to a blocking position for blocking the fluid passage (304).

4. Filter system (112) according to Claim 3, **characterized in that** the movement apparatus (308)
a) comprises a linear guide (310) which can be used to guide one or more blocking elements (302) so as to carry out a translational movement; and/or
b) comprises a rotary guide (322) which can be used to guide one or more blocking elements (302) so as to carry out a rotational movement.

5. Filter system (112) according to one of Claims 1 to 4, **characterized in that** at least one blocking element (302) of the blocking apparatus (300) is assigned multiple fluid passages (304), in order to selectively block or release different fluid passages (304) by means of the same at least one blocking element (302).

6. Filter system (112) according to one of Claims 1 to 5, **characterized in that** one or more blocking elements (302) or all the blocking elements (302) of the blocking apparatus (300) are able to be brought to one or more storage positions, wherein the one or the multiple blocking elements (302) or all the blocking elements (302) in the respective storage position are spaced apart from the one or the multiple fluid passages (304) or from all the fluid passages (304).

7. Filter system (112) according to one of Claims 1 to 6, **characterized in that** one or more blocking elements (302) in a releasing position of same
a) are able to be placed against an intermediate wall (330) of the filter system (112), said intermediate wall being arranged between two filter module receptacles (120) and/or between two filter modules (122); and/or
b) are able to be brought to or are arranged in an intermediate region (328) of the filter system (112), said intermediate region being arranged between two filter module receptacles (120) and/or between two filter modules (122).

8. Filter system (112) according to one of Claims 1 to 7, **characterized in that** the fluid passage (304) is arranged within the filter module receptacle (120), spaced apart from an access opening (146) of the filter module receptacle (120),
through which access opening the filter module (122) is able to be introduced into the filter module receptacle (120) or removed from same.

9. Filter system (112) according to one of Claims 1 to 8, **characterized in that** the fluid passage (304) is arranged between
a) an inlet opening (134) of the filter module receptacle (120), through which inlet opening the crude gas stream flows or is able to be guided from the basic structure (116) into the filter module receptacle (120) and/or from the basic structure (116) into the filter module (122) arranged in the filter module receptacle (120), and
b) an access opening (146) of the filter module receptacle (120), through which access opening the filter module (122) is able to be introduced into the filter module receptacle (120) or removed from same.

10. Filter system (112) according to one of Claims 1 to 7, **characterized in that** the fluid passage (304) is an inlet opening (134) of a filter module receptacle (120), through which inlet opening the crude gas stream flows or is able to be guided from the basic structure (116) into the filter module receptacle (120) and/or from the basic structure (116) into the filter module (122) arranged in the filter module receptacle (120).

11. Filter system (112) according to one of Claims 1 to 10, **characterized in that** a seal apparatus (326), for example a brush seal and/or a lip seal, is arranged between the fluid passage (304) and an access opening (146) of the filter module receptacle (120), through which access opening the filter module (122) is able to be introduced into the filter module receptacle (120) or removed from same.

12. Painting installation (100) for painting workpieces (102), in particular vehicle bodies (104), comprising at least one filter system (112) according to one of Claims 1 to 11.

13. Method for separating contaminants from a crude gas stream containing contaminants by means of a filter system (112), in particular a filter system according to one of Claims 1 to 11, wherein the method comprises the following:
- feeding the crude gas stream from a part of a basic structure (116) of the filter system (112), said part guiding the crude gas stream, to a filter module (122) of the filter system (112), wherein the filter module (122) is arranged on and/or in a filter module receptacle (120) of the filter system (112);
- separating contaminants from the crude gas stream at one or more filter elements (182) of the filter module (122);
- blocking a fluid passage (304) between that part of the basic structure (116) which guides the crude gas stream and an environment (306) of the filter system (112) by means of a blocking apparatus (300);
- removing the filter module (122) from and/or out of the filter module receptacle (120),
wherein the fluid passage (304) is arranged within the filter module receptacle (120), spaced apart from an inlet opening (134) of the filter module receptacle (120), through which inlet opening the crude gas stream flows or is able to be guided from the basic structure (116) into the filter module receptacle (120) and/or from the basic structure (116) into the filter module (122) arranged in the filter module receptacle (120), and
wherein the blocking apparatus (300) comprises one or more blocking elements (302), in the form of pivoting doors or pivoting gates, which are selectively able to be introduced into the fluid passage (304) or removed from same and are movable by and/or owing to a movement of the filter module (122) itself.

14. Method according to Claim 13, **characterized in that** the fluid passage (304) is blocked before the filter module (122) is removed from and/or out of the filter module receptacle (120) or while the filter module (122) is being removed from and/or out of the filter module receptacle (120).

## Revendications

1. Installation de filtration (112) destinée à séparer des impuretés d'un flux de gaz brut contenant des impuretés, ladite installation de filtration comprenant
une structure de base (116) qui peut être traversée par le flux de gaz brut et qui comprend au moins un réceptacle de module de filtration (120) destiné à recevoir au moins un module de filtration (122) et
au moins un module de filtration (122), qui peut éventuellement être disposé sur et/ou dans l'au moins un réceptacle de module de filtration (120) ou peut être éloigné et/ou retiré de celui-ci,
**caractérisée en ce que**
l'installation de filtration (112) comprend un dispositif de blocage (300) qui bloque ou libère sélectivement un passage de fluide (304) entre une partie de la structure de base (116) qui guide le flux de gaz brut et un environnement (306) de l'installation de filtration (112),
le passage de fluide (304) étant disposé à l'intérieur du réceptacle de module de filtration (120), en étant espacé d'une ouverture d'entrée (134) du réceptacle de module de filtration (120), par laquelle le gaz brut s'écoule ou peut être guidé de la structure de base (116) jusque dans le réceptacle de module de filtration (120) et/ou de la structure de base (116) jusque dans le module de filtration (122) disposé dans le réceptacle de module de filtration (120), et
le dispositif de blocage (300) comprenant un ou plusieurs éléments de blocage (302), tels que des portes pivotantes ou des portails pivotants, qui peuvent être sélectivement introduits dans le passage de fluide (304) ou retirés de celui-ci et qui peuvent être déplacés par un mouvement, et/ou en raison d'un mouvement, de l'au moins un module de filtration (122) lui-même.

2. Installation de filtration (112) selon la revendication 1, **caractérisée en ce que** le dispositif de blocage (300) comprend un ou plusieurs éléments de blocage (302) permettant de recouvrir ou libérer sélectivement le passage de fluide (304).

3. Installation de filtration (112) selon l'une des revendications 1 ou 2, **caractérisée en ce que** le dispositif de blocage (300) comprend un dispositif de déplacement (308),
a) qui permet d'amener le ou les éléments de blocage (302) d'une position de blocage, dans laquelle le passage de fluide (304) est bloqué, à une position de libération dans laquelle le passage de fluide (304) est libéré; et/ou
b) qui permet d'amener le ou les éléments de blocage (302) d'une position de libération, dans laquelle le passage de fluide (304) est libéré, à une position de blocage dans laquelle le passage de fluide (304) est bloqué.

4. Installation de filtration (112) selon la revendication 3, **caractérisée en ce que** le dispositif de déplacement (308)
a) comprend un guide linéaire (310) permettant de guider un ou plusieurs éléments de blocage (302) afin d'effectuer un mouvement de translation ; et/ou
b) comprend un guide en rotation (322) permettant de guider un ou plusieurs éléments de blocage (302) afin d'effectuer un mouvement de rotation.

5. Installation de filtration (112) selon l'une des revendications 1 à 4, **caractérisée en ce qu'**au moins un élément de blocage (302) du dispositif de blocage (300) est associé à plusieurs passages de fluide (304) afin de bloquer ou libérer sélectivement différents passages de fluide (304) au moyen du même au moins un élément de blocage (302).

6. Installation de filtrage (112) selon l'une des revendications 1 à 5, **caractérisée en ce qu'**un ou plusieurs éléments de blocage (302) ou tous les éléments de blocage (302) du dispositif de blocage (300) peuvent être amenés dans une ou plusieurs positions de rangement, les un ou plusieurs éléments de blocage (302) ou tous les éléments de blocage (302) étant disposés à distance des un ou plusieurs passages de fluide (304) ou de tous les passages de fluide (304).

7. Installation de filtration (112) selon l'une des revendications 1 à 6, **caractérisée en ce qu'**un ou plusieurs éléments de blocage (302), dans une position de libération de ceux-ci,
a) peuvent venir en appui sur une paroi intermédiaire (330) de l'installation de filtration (112), qui est disposée entre deux réceptacles de module de filtration (120) et/ou entre deux modules de filtration (122); et/ou
b) peuvent être amenés ou sont disposés dans une zone intermédiaire (328) de l'installation de filtration (112) disposée entre deux réceptacles de module de filtration (120) et/ou entre deux modules de filtration (122).

8. Installation de filtration (112) selon l'une des revendications 1 à 7, **caractérisée en ce que** le passage de fluide (304) est ménagé à l'intérieur du réceptacle de module de filtration (120), en étant espacé d'une ouverture d'accès (146) du réceptacle de module de filtration (120) par laquelle le module de filtration (122) peut être inséré dans le réceptacle de module de filtration (120) ou retiré de celui-ci.

9. Installation de filtration (112) selon l'une des revendications 1 à 8, **caractérisée en ce que** le passage de fluide (304) est ménagé entre
a) une ouverture d'entrée (134) du réceptacle de module de filtration (120) par laquelle le gaz brut s'écoule ou peut être guidé de la structure de base (116) jusque dans le réceptacle de module de filtration (120) et/ou de la structure de base (116) jusque dans le module de filtration (122) disposé dans le réceptacle de module de filtration (120), et
b) une ouverture d'accès (146) du réceptacle de module de filtration (120) par laquelle le module de filtration (122) peut être inséré dans le réceptacle de module de filtration (120) ou retiré de celui-ci.

10. Installation de filtration (112) selon l'une des revendications 1 à 7, **caractérisée en ce que** le passage de fluide (304) est une ouverture d'entrée (134) d'un réceptacle de module de filtration (120) par laquelle le flux de gaz brut s'écoule ou peut être guidé de la structure de base (116) jusque dans le réceptacle de module de filtration (120) et/ou de la structure de base (116) jusque dans le module de filtration (122) disposé dans le réceptacle de module de filtration (120).

11. Installation de filtration (112) selon l'une des revendications 1 à 10, **caractérisée en ce qu'**un dispositif d'étanchéité (326), par exemple une garniture d'étanchéité à brosse et/ou une garniture d'étanchéité à lèvre, est disposé entre le passage de fluide (304) et une ouverture d'accès (146) du réceptacle de module de filtration (120) par laquelle le module de filtration (122) peut être inséré dans le réceptacle de module de filtration (120) ou peut être retiré de celui-ci.

12. Installation de peinture (100) destinée à peindre des pièces (102), notamment des carrosseries de véhicule (104), ladite installation de peinture comprenant au moins une installation de filtration (112) selon l'une des revendications 1 à 11.

13. Procédé de séparation d'impuretés d'un flux de gaz brut contenant des impuretés au moyen d'une installation de filtration (112), notamment d'une installation de filtration selon l'une des revendications 1 à 11, le procédé comprenant les étapes suivantes:
- amener le flux de gaz brut d'une partie de guidage de flux de gaz brut d'une structure de base (116) de l'installation de filtration (112) à un module de filtration (122) de l'installation de filtration (112), le module de filtration (122) étant disposé sur et/ou dans un réceptacle de module de filtration (120) de l'installation de filtration (112);
- séparer des impuretés du flux de gaz brut au niveau d'un ou plusieurs éléments de filtration (182) du module de filtration (122);
- bloquer un passage de fluide (304) entre la partie de guidage de flux de gaz brut de la structure de base (116) et un environnement (306) de l'installation de filtration (112) au moyen d'un dispositif de blocage (300);
- éloigner et/ou retirer le module de filtration (122) du support de module de filtration (120),
le passage de fluide (304) étant ménagé à l'intérieur du réceptacle de module de filtration (120), en étant espacé d'une ouverture d'entrée (134) du réceptacle de module de filtration (120) par laquelle le gaz brut s'écoule ou peut être guidé de la structure de base (116) jusque dans le réceptacle de module de filtration (120) et/ou de la structure de base (116) jusque dans le module de filtration (122) disposé dans le réceptacle de module de filtration (120), et
le dispositif de blocage (300) comprenant un ou plusieurs éléments de blocage (302), tels que des portes pivotantes ou des portails pivotants, qui peuvent être sélectivement insérés dans le passage de fluide (304) ou retirés de celui-ci et qui peuvent être déplacés par un mouvement et/ou en raison d'un mouvement du module de filtration (122) lui-même.

14. Procédé selon la revendication 13, **caractérisé en ce que** le passage de fluide (304) est bloqué avant que le module de filtration (122) ne soit éloigné et/ou retiré du réceptacle de module de filtration (120) ou pendant que le module de filtration (122) est éloigné et/ou retiré du support de module de filtration (120).
